(19) Europäisches Patentamt

European Patent Office

Office européen des brevets

(11) **EP 2 992 278 B1**

(12) **FASCICULE DE BREVET EUROPEEN**

(45) Date de publication et mention
de la délivrance du brevet:
**15.05.2019 Bulletin 2019/20**

(51) Int Cl.:
***F25B 33/00*** *(2006.01)*        ***F25B 15/04*** *(2006.01)*

(21) Numéro de dépôt: **14717729.9**

(22) Date de dépôt: **10.04.2014**

(86) Numéro de dépôt international:
**PCT/EP2014/057308**

(87) Numéro de publication internationale:
**WO 2014/177359 (06.11.2014 Gazette 2014/45)**

(54) **RECTIFIEUR POUR MACHINE THERMODYNAMIQUE A ABSORPTION A DISPOSITIF DE LIAISON FORMANT SIPHON**

GLEICHRICHTER FÜR THERMODYNAMISCHE ABSORPTIONSMASCHINE MIT VERBINDUNGSVORRICHTUNG ALS SIPHON

RECTIFIER FOR THERMODYNAMIC ABSORPTION MACHINE HAVING A CONNECTION DEVICE ACTING AS A SIPHON

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2013 FR 1353980**

(43) Date de publication de la demande:
**09.03.2016 Bulletin 2016/10**

(73) Titulaire: **Commissariat à l'Energie Atomique et aux Energies Alternatives
75015 Paris (FR)**

(72) Inventeurs:
• WYTTENBACH, Joël
  73230 Thoiry (FR)
• JOBARD, Xavier
  F-41190 Chambon-sur-cisse (FR)

(74) Mandataire: **Novaimo
ActiTech 8
60 avenue Marie Curie
Archamps Technopole
74166 Saint Julien-en-Genevois Cedex (FR)**

(56) Documents cités:
**GB-A- 458 836        US-A- 3 137 144
US-A- 4 972 679**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique de l'invention**

L'invention concerne un rectifieur pour machine thermodynamique à absorption, comprenant une entrée alimentant le rectifieur en un fluide d'entrée diphasique ayant une phase liquide et une phase gazeuse et formé par un mélange entre un réfrigérant et un absorbant. Le rectifieur est notamment destiné à être implanté en aval d'un générateur appartenant à la machine et réalisant une désorption entre le réfrigérant et l'absorbant utilisés par la machine pour former ledit fluide d'entrée diphasique à la sortie du générateur, lui-même implanté en aval d'un absorbeur appartenant aussi à la machine et réalisant une absorption du réfrigérant par l'absorbant.
L'invention a pour objet également une machine thermodynamique à absorption comprenant au moins un tel rectifieur.

**État de la technique**

La forte augmentation actuelle des besoins de climatisation en période estivale confère au marché du rafraîchissement solaire un potentiel de développement très important. Ces systèmes utilisent majoritairement des machines à absorption.
Avec l'avènement, depuis quelques années, des machines thermodynamiques à absorption de petite puissance d'une part et de la volonté de disposer de solutions compactes et complètes d'autre part, le marché devrait connaître un fort développement futur. Toutefois, l'une des limitations à ce développement est le coût d'investissement initial nécessairement très important. Pour cette raison, un développement important des machines de petites puissances doit être effectué pour en baisser les coûts. Il est donc nécessaire de répondre aux problématiques budgétaires et d'industrialisation susmentionnées en même temps que techniques évoquées plus loin. Les problématiques techniques essentielles concernent notamment le composant de la machine connu sous la dénomination « rectifieur », connu également sous la dénomination « rectificateur ».
Dans une machine thermodynamique par absorption, le compresseur classique est remplacé par une gestion astucieuse et combinée de premier et deuxième fluides respectivement absorbant et réfrigérant, avec un transfert de masse par absorption du réfrigérant (par exemple de l'ammoniac) vers l'absorbant (par exemple de l'eau) réalisé dans un composant de la machine connu sous la dénomination « absorbeur ». A la sortie de l'absorbeur, la solution formée par le mélange entre le réfrigérant et l'absorbant après absorption est chauffé (par exemple grâce à un apport d'énergie solaire), dans un composant connu sous la dénomination « générateur », pour réaliser une désorption du réfrigérant et fournir une force motrice pour le circuit réfrigérant. A la sortie du générateur, le réfrigérant à l'état gazeux à la suite de la désorption circule dans le circuit de réfrigération tandis que l'absorbant est dirigé à l'état liquide vers l'absorbeur. Le problème provient du fait que la phase gazeuse du fluide sortant du générateur, une fois séparée de la phase liquide, bien que contenant majoritairement du réfrigérant, peut également contenir des traces d'absorbant.
Or, les machines à absorption utilisant des couples comme l'ammoniac et l'eau sont relativement sensibles à la qualité du réfrigérant issu de la désorption réalisée au sein du générateur. Ceci est particulièrement vrai pour les applications où la température d'évaporation du réfrigérant est basse, notamment négative. Dans le cas particulier où le réfrigérant est de l'ammoniac, son évaporation est perturbée par la présence de traces d'eau. Ces traces d'absorbant empêchent l'évaporation totale du réfrigérant lorsque l'évaporateur est réglé sur un niveau de surchauffe classique pour une machine thermodynamique utilisant de l'ammoniac pur. Il en résulte donc une perte de puissance et une instabilité de la boucle puisqu'une faible variation d'eau influe fortement sur le glissement de la température d'évaporation. Cette problématique concerne également plusieurs autres couples de réfrigérant et d'absorbant utilisés par les machines à absorption.
Dans ce contexte, le rectifieur d'une machine à absorption permet d'améliorer la qualité du réfrigérant, en éliminant la majeure partie d'absorbant encore contenu dans la phase gazeuse séparée à la sortie du générateur. Un principe de rectification consiste à refroidir cette phase gazeuse pour en condenser une fraction seulement, sachant que ces condensats sont fortement concentrés en absorbant. La fraction gazeuse restante non condensée dispose d'une concentration plus forte en réfrigérant qu'à l'entrée du rectifieur.
La difficulté de la rectification consiste à concilier les fonctions suivantes :

- l'ajout d'un organe d'échange thermique réalisant cette condensation, sur la ligne gazeuse du circuit réfrigérant,
- le drainage des condensats créés vers le circuit de retour vers l'absorbeur.

La circulation à travers un condenseur génère une perte de charge par frottements visqueux et donc une perte de pression. La fraction condensée doit aller vers une zone où la pression est plus forte puisqu'elle doit circuler en sens inverse pour rejoindre le circuit de retour des liquides vers l'absorbeur. Une force motrice supplémentaire est donc nécessaire. Une solution consiste à exploiter la gravité, puisque la fraction condensée présente une masse volumique très largement supérieure à celle de la fraction restante gazeuse non condensée. Il est connu, par exemple à l'image du document KR20100026201, d'insérer un échangeur thermique dans la partie haute d'un séparateur rempli en partie basse par la solution à la température d'équilibre issue du générateur. Un flux gazeux est généré par désorption, dont une fraction est condensée par l'échangeur thermique. La fraction condensée retombe par gravité dans la partie basse du séparateur tandis que la fraction restante gazeuse non condensée s'échappe en partie haute du séparateur. Cette technique a pour inconvénient de nécessiter un volume important capable d'englober à la fois un volume de liquide et un échangeur thermique peu compact, étant de faible perte de charge. En outre, elle nécessite de fabriquer des composants spécifiques sur mesure non disponibles industriellement dans le commerce. Le volume par composant est un point critique pour les machines à absorption de petite puissance notamment, puisqu'il peut impliquer le classement dans une catégorie plus ou moins contraignante de la directive européenne 97/23-CE qui concerne les équipements sous pression. GB 458 836 A divulgue un rectifieur pour machine thermodynamique à absorption selon le préambule de la revendication 1.

Ainsi, il existe un besoin de disposer d'un rectifieur qui réponde aux deux fonctions citées plus haut, tout en apportant un avantage certain en termes de volume par composant du rectifieur et en se basant uniquement sur des composants simples ou industriels.

**Objet de l'invention**

Le but de la présente invention est de proposer un rectifieur qui remédie aux inconvénients listés ci-dessus.

Notamment, l'invention consiste à fournir un tel rectifieur permettant simultanément :

- la fourniture et l'implantation d'un condenseur dans lequel circule la phase gazeuse à rectifier,
- le drainage des condensats créés par la rectification vers le circuit de retour vers l'absorbeur,
- un gain de volume par composant du rectifieur,
- l'exploitation uniquement de composants simples ou industriels.

Ces buts peuvent être atteints par un rectifieur pour machine thermodynamique à absorption, comprenant une entrée alimentant le rectifieur en un fluide d'entrée diphasique ayant une phase liquide et une phase gazeuse et formé par un mélange entre un réfrigérant et un absorbant, le rectifieur comprenant les éléments distincts suivants :

- un premier séparateur assurant une séparation entre la phase liquide et la phase gazeuse du fluide d'entrée,
- un condenseur condensant une fraction de la phase gazeuse séparée par le premier séparateur,
- un deuxième séparateur assurant une séparation entre la fraction condensée par le condenseur et une fraction restante non condensée par le condenseur,
- et un dispositif de liaison reliant les premier et deuxième séparateurs et configuré de sorte à former un siphon pour la phase liquide séparée par le premier séparateur et pour la fraction condensée séparée par le deuxième séparateur.

Le dispositif de liaison met de préférence en communication fluidique la phase liquide séparée par le premier séparateur et la fraction condensée séparée par le deuxième séparateur d'une manière bloquant une circulation de la phase gazeuse séparée par le premier séparateur et une circulation de la fraction non condensée séparée par le deuxième séparateur à travers le dispositif de liaison.

Le dispositif de liaison peut inhiber la circulation de la phase gazeuse séparée par le premier séparateur et la circulation de la fraction non condensée séparée par le deuxième séparateur, en direction d'une première sortie du rectifieur évacuant hors du rectifieur un mélange réalisé dans le dispositif de liaison entre la phase liquide séparée par le premier séparateur et la fraction condensée séparée par le deuxième séparateur.

Le dispositif de liaison est de préférence configuré de sorte à maintenir une colonne de liquide formée en tout ou partie par la fraction condensée séparée par le deuxième séparateur, ladite colonne de liquide étant en communication fluidique avec la phase liquide séparée par le premier séparateur.

Le deuxième séparateur peut être disposé plus haut que le premier séparateur, la différence d'altitude entre les premier et deuxième séparateurs étant supérieure à la hauteur de ladite colonne de liquide.

La différence d'altitude entre les premier et deuxième séparateurs est de préférence supérieure à la hauteur de ladite colonne de liquide calculée par la formule suivante :

$$h = \frac{g \cdot \left( \rho_{12} \cdot \Delta z_{12} - \left( \frac{\rho_{12} + \rho_{34}}{2} \right) \cdot \Delta z_{23} - \rho_{34} \cdot \Delta z_{34} \right) + \Lambda_{12} \cdot \frac{L_{12}}{D_{h-12}} \cdot \frac{\rho_{12} \cdot u_{12}^{2}}{2} + \Delta P_{\text{échangeur}} - \frac{\rho_{12}.u_{12}^{2}}{2} + \frac{\rho_{34}.u_{34}^{2}}{2}}{\rho_{liquide} \cdot g}$$

où h est la hauteur de la colonne liquide entre la surface libre de la fraction condensée séparée par le deuxième séparateur et la surface libre de la phase liquide séparée par le premier séparateur, g est la constante gravitationnelle, $\rho_{12}$ est la masse volumique en $kg/m^3$ de la phase gazeuse située entre la surface libre de la phase liquide séparée par le premier séparateur et l'entrée du condenseur, $\Delta z_{12}$ est la différence d'altitude entre la surface libre de la phase liquide séparée par le premier séparateur et l'entrée du condenseur, $\Lambda_{12}$ est le coefficient de frottement visqueux et $L_{12}$ est la distance entre la surface libre de la phase liquide séparée par le premier séparateur et l'entrée du condenseur, $D_{h\text{-}12}$ est le diamètre de la conduite de raccordement entre le premier séparateur et le condenseur, $u_{12}$ est la vitesse d'écoulement de la phase gazeuse entre le premier séparateur et le condenseur, $\Delta z_{23}$ est la différence d'altitude entre l'entrée et la sortie du condenseur, $\Delta P_{\text{échangeur}}$ est la perte de charge subie à travers le condenseur, $\rho_{34}$ est la masse volumique en $kg/m^3$ et $u_{34}$ est la vitesse d'écoulement de la fraction non condensée entre la sortie du condenseur et la surface libre de la fraction condensée au sommet de la colonne de liquide, $\Delta z_{34}$ est la différence d'altitude entre la sortie du condenseur et la surface libre de la fraction condensée au sommet de la colonne de liquide, $\rho_{\text{liquide}}$ est la masse volumique en $kg/m^3$ de la phase liquide séparée par le premier séparateur et de la fraction condensée séparée par le deuxième séparateur.

La différence d'altitude entre les premier et deuxième séparateurs peut notamment être supérieure à la hauteur de ladite colonne de liquide estimée par l'équation suivante :

$$ h \approx \frac{\Lambda_{12} \cdot \dfrac{L_{12}}{D_{h-12}} \cdot \dfrac{\rho_{12} \cdot u_{12}^{2}}{2} + \Delta P_{\text{échangeur}}}{\rho_{\text{liquide}} \cdot g} $$

Le condenseur peut être disposé plus haut que la base des premier et deuxième séparateurs.

Le rectifieur comprend préférentiellement une deuxième sortie distincte de la première sortie et évacuant hors du rectifieur la fraction non condensée séparée par le deuxième séparateur.

Le premier séparateur peut être constitué par un premier séparateur dans lequel la séparation entre les parties gazeuse et liquide du fluide d'entrée se pratique par gravité, ledit premier séparateur étant rempli dans une partie inférieure par la phase liquide séparée par gravité et dans une partie supérieure par la phase gazeuse séparée par gravité, le premier séparateur comprenant :

- au moins une première ouverture d'entrée aménagée sur une face latérale du premier séparateur et débouchant dans le premier séparateur,
- au moins une première ouverture de sortie aménagée dans la partie inférieure du premier séparateur, débouchant dans le premier séparateur et assurant l'écoulement hors du premier séparateur uniquement de la phase liquide séparée par gravité dans le premier séparateur,
- et au moins une deuxième ouverture de sortie aménagée dans la partie supérieure du premier séparateur, débouchant dans le premier séparateur et assurant l'écoulement hors du premier séparateur uniquement de la phase gazeuse séparée par gravité dans le premier séparateur.

Le rectifieur comprend de préférence :

- une première conduite de raccordement, notamment sensiblement horizontale, disposée entre l'entrée du rectifieur et la première ouverture d'entrée du premier séparateur et dans laquelle le fluide d'entrée circule,
- une deuxième conduite de raccordement, notamment sensiblement verticale, disposée entre la deuxième ouverture de sortie du premier séparateur et une entrée du condenseur et dans laquelle circule la phase gazeuse séparée par gravité dans le premier séparateur.

Le deuxième séparateur peut être constitué par un deuxième séparateur distinct du premier séparateur, dans lequel la séparation entre la fraction condensée et la fraction restante non condensée par le condenseur se pratique par gravité, ledit deuxième séparateur comprenant :

- au moins une ouverture d'entrée aménagée sur une face latérale du deuxième séparateur et débouchant dans le deuxième séparateur,
- au moins une première ouverture de sortie aménagée dans une partie inférieure du deuxième séparateur, débouchant dans le deuxième séparateur,
- et au moins une deuxième ouverture de sortie aménagée dans une partie supérieure du deuxième séparateur, débouchant dans le deuxième séparateur et assurant l'écoulement hors du deuxième séparateur uniquement de la fraction non condensée séparée par gravité dans le deuxième séparateur.

Le rectifieur peut avantageusement comprendre :

- une troisième conduite de raccordement, notamment sensiblement horizontale, reliant une sortie du condenseur notamment située plus bas que l'entrée du condenseur, à l'ouverture d'entrée du deuxième séparateur, dans laquelle circulent conjointement les fractions condensée et non condensée par le condenseur,
- une quatrième conduite de raccordement disposée entre la deuxième sortie du rectifieur et la deuxième ouverture de sortie du deuxième séparateur, dans laquelle circule la fraction non condensée séparée par gravité dans le deuxième séparateur.

Le dispositif de liaison comprend préférentiellement :

- une cinquième conduite de raccordement, notamment sensiblement verticale à proximité du premier séparateur, disposée entre la première sortie du rectifieur et la première ouverture de sortie du premier séparateur, dans laquelle circule la phase liquide séparée par gravité dans le premier séparateur,
- une sixième conduite de raccordement, notamment sensiblement verticale à proximité du deuxième séparateur, s'étendant depuis la première ouverture de sortie du deuxième séparateur jusqu'à soit un point de connexion à la cinquième conduite de raccordement situé plus bas que le premier séparateur, soit une deuxième ouverture d'entrée du premier séparateur débouchant dans le premier séparateur.

De préférence, la sixième conduite de raccordement étant raccordée à la cinquième conduite de raccordement, le dispositif de liaison comprend un système d'aspiration, notamment par un effet de Venturi, aménagé audit point de connexion et configuré de sorte à aspirer la fraction condensée séparée par le deuxième séparateur à l'intérieur de la sixième conduite de raccordement dans un sens opposé au deuxième séparateur.

La deuxième ouverture d'entrée du premier séparateur peut être aménagée dans la partie inférieure du premier séparateur de sorte à déboucher dans le premier séparateur en dessous de la surface libre de la phase liquide séparée par gravité dans le premier séparateur et contenue dans la partie inférieure du premier séparateur.

La deuxième ouverture d'entrée du premier séparateur peut être aménagée dans la partie supérieure du premier séparateur et la sixième conduite de raccordement peut se prolonger à l'intérieur du premier séparateur au-delà de la deuxième ouverture d'entrée du premier séparateur, jusqu'à déboucher en dessous de la surface libre de la phase liquide séparée par gravité dans le premier séparateur et contenue dans la partie inférieure du premier séparateur.

La sixième conduite de raccordement comprend de préférence un rétrécissement local de section, linéaire ou ponctuel, notamment à proximité du deuxième séparateur.

La section de passage du premier séparateur et/ou de la cinquième conduite de raccordement peut être dimensionnée de sorte que la phase liquide séparée par gravité dans le premier séparateur forme un effet de bouchon pour la phase gazeuse séparée par gravité dans le premier séparateur, en direction de la première sortie du rectifieur.

La section de passage du deuxième séparateur et/ou de la sixième conduite de raccordement peut être dimensionnée de sorte que la fraction condensée séparée par gravité dans le deuxième séparateur forme un effet de bouchon pour la fraction non condensée séparée par gravité dans le deuxième séparateur, en direction de la première sortie du rectifieur.

Le condenseur peut notamment être constitué par un échangeur thermique.

Enfin, un autre aspect concerne une machine thermodynamique à absorption qui comprend au moins un tel rectifieur.

**Description sommaire des dessins**

D'autres avantages et caractéristiques ressortiront plus clairement de la description qui va suivre de modes particuliers de réalisation de l'invention donnés à titre d'exemples non limitatifs et représentés sur les dessins annexés, dans lesquels :

- la figure 1 illustre schématiquement une machine thermodynamique à absorption munie d'un exemple de rectifieur selon l'invention,
- la figure 2 est un diagramme fonctionnel du rectifieur,
- la figure 3 représente en coupe verticale un premier mode de réalisation du rectifieur selon l'invention,
- les figures 4 et 5 représentent en coupe verticale un deuxième mode de réalisation du rectifieur selon l'invention,
- et les figures 6 et 7 représentent en coupe verticale un troisième mode de réalisation du rectifieur selon l'invention.

**Description de modes préférentiels de l'invention**

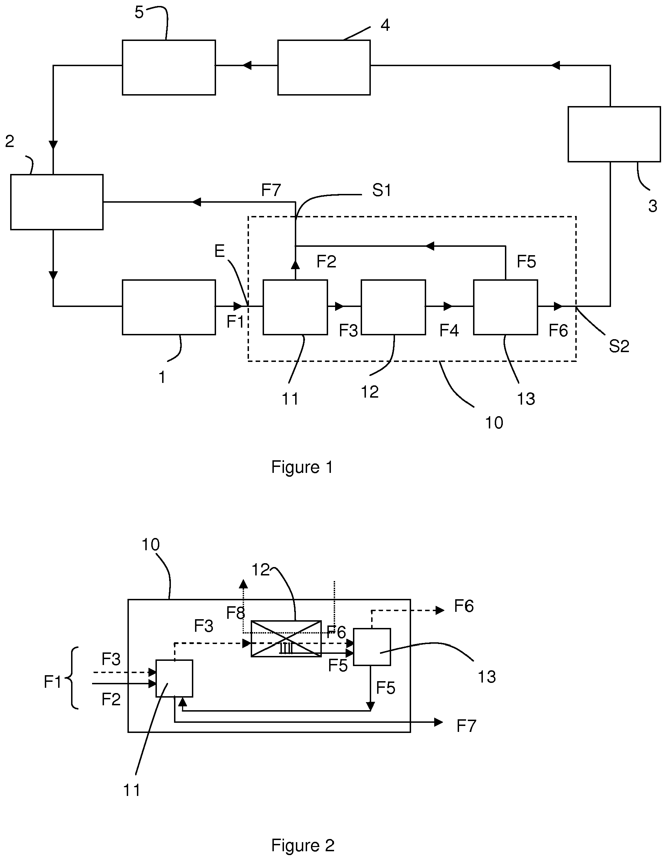

L'invention décrite plus loin en référence aux figures 1 à 7 concerne un rectifieur 10 (figures 2 à 7) pour une machine thermodynamique à absorption ainsi qu'une machine thermodynamique à absorption (figure 1) qui comprend au moins un tel rectifieur 10.

En référence à la figure 1, la machine thermodynamique par absorption combine l'utilisation de premier et deuxième fluides respectivement absorbant et réfrigérant. Elle met en oeuvre un transfert de masse par absorption du réfrigérant (constitué par exemple par de l'ammoniac) vers l'absorbant (constitué par exemple par de l'eau) réalisé dans un absorbeur 2. Le réfrigérant arrive à l'absorbeur 2 à l'état gazeux ou quasiment totalement gazeux. La machine à absorption utilise le couple de fluides formé par le réfrigérant et l'absorbant, ce dernier permettant de transporter le réfrigérant de la basse pression à la haute pression du circuit thermodynamique. La solution issue de l'absorbeur 2 est transférée vers un générateur 1. Une pompe est de préférence prévue entre le générateur 1 et l'absorbeur 2 pour la circulation fluidique. Dans le générateur 1, la solution correspondant au mélange entre le réfrigérant et l'absorbant après absorption, est chauffée par exemple grâce à un apport d'énergie solaire, réalisant une désorption entre le réfrigérant et l'absorbant et fournissant une force motrice pour le circuit réfrigérant.

A la sortie du générateur 1, le fluide repéré F1 est diphasique, incluant une phase liquide F2 et une phase gazeuse F3, et est transféré vers le rectifieur 10. Le fluide F1 est ainsi nommé le « fluide d'entrée» du rectifieur 10. La phase liquide F2 est essentiellement constituée par de l'absorbant. La phase gazeuse F3 est essentiellement constituée par du réfrigérant, mais peut inclure des quantités non désirées d'absorbant.

Autrement dit, le réfrigérant à l'état gazeux correspondant à la majorité de la phase gazeuse F3 du fluide d'entrée F1, à la suite de la désorption, circule ensuite dans le circuit de réfrigération qui comprend notamment une association en série d'un condenseur 3, d'un détendeur 4 et d'un évaporateur 5. Après avoir traversé le circuit classique de réfrigération, le réfrigérant est à nouveau absorbé par l'absorbant au sein de l'absorbeur 2, avant de revenir vers le générateur 1. Par contre, suite à la désorption réalisée dans le générateur 1, l'absorbant est dirigé à l'état liquide vers l'absorbeur 2, ce qui correspond à la majorité de la phase liquide F2 du fluide d'entrée F1.

Ainsi, le rectifieur 10 est destiné à être implanté en aval du générateur 1 réalisant la désorption entre le réfrigérant et l'absorbant utilisés par la machine. Cette désorption a pour effet de former le fluide d'entrée F1 diphasique à la sortie du générateur 1, lui-même implanté en aval de l'absorbeur 2 réalisant l'absorption du réfrigérant par l'absorbant. En aval du générateur 1, le rectifieur 10 doit donc remplir une fonction consistant à séparer le fluide d'entrée F1 qu'il reçoit à son entrée E pour permettre, après séparation, de diriger une partie de la phase gazeuse F3 ainsi séparée vers le circuit de réfrigération de la machine et sa phase liquide F2 ainsi séparée vers un circuit de retour de liquides formés par de l'absorbant vers l'absorbeur 2.

Le rectifieur 10 comprend une première sortie S1 pour la sortie des liquides hors du rectifieur 10 et une deuxième sortie S2 distincte de la première sortie S1, pour la sortie des gaz hors du rectifieur 10. La première sortie S1 est donc reliée au circuit de retour des liquides vers l'absorbeur 2. La deuxième sortie S2 est reliée au circuit de réfrigération de la machine.

En référence à la figure 2, le rectifieur 10 prend à son entrée E le fluide d'entrée F1 provenant du générateur 1. Le fluide d'entrée F1 se compose de la phase gazeuse F3 (constitué essentiellement par du réfrigérant) et de la phase liquide F2 (constitué essentiellement par de l'absorbant).

Le rectifieur 10 comprend les éléments distincts suivants :

- un premier séparateur 11 assurant une séparation entre la phase liquide F2 et la phase gazeuse F3 du fluide d'entrée F1,
- un condenseur 12 condensant une fraction F5 de la phase gazeuse F3 préalablement séparée par le premier séparateur 11,
- un deuxième séparateur 13 assurant une séparation entre la fraction condensée F5 préalablement par le condenseur 12 et une fraction restante non condensée F6 par le condenseur 12.

Le fluide repéré F4 sur les figures 1 et 2 en sortie du condenseur 12 est donc de type diphasique et correspond à l'écoulement conjoint des fractions condensée F5 et non condensée F6. Le deuxième séparateur 13 sert à séparer ce fluide F4, afin de séparer les fractions condensée F5 et non condensée F6. La deuxième sortie S2 du rectifieur 10 est alimentée par la fraction non condensée F6 et évacue hors du rectifieur 10 la fraction non condensée F6 séparée par le deuxième séparateur 13.

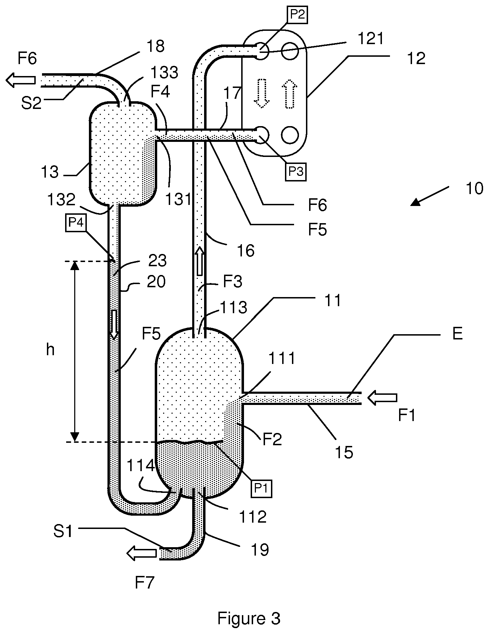

Par ailleurs, le rectifieur 10 comprend un dispositif de liaison (figure 3) reliant les premier et deuxième séparateurs 11, 13 et configuré de sorte à former un siphon pour la phase liquide F2 séparée par le premier séparateur 11 et pour la fraction condensée F5 séparée par le deuxième séparateur 13. Le dispositif de liaison met en communication la fraction condensée F5 et la phase liquide F2 et permet de les mélanger. La première sortie S1 du rectifieur 10 est alimentée par ce mélange repéré F7 entre les fluides F2 et F5 pour ensuite alimenter le circuit de retour de liquides vers l'absorbeur 2.

Il ressort de ce qui précède que :

- la « phase gazeuse » repérée F3 est essentiellement du réfrigérant, avec une possibilité de traces involontaires d'absorbant,
- la « phase liquide » repérée F2 est essentiellement de l'absorbant sous forme liquide,
- la « fraction condensée » repérée F5 est constituée par des condensats liquides formés essentiellement par de l'absorbant préalablement contenu dans la phase gazeuse F3,
- et la « fraction non condensée » F6 est essentiellement du réfrigérant sous forme gazeuse.

Avantageusement, dans les trois modes de réalisation détaillés ci-après, le premier séparateur 11 est constitué par un premier séparateur dans lequel la séparation entre les parties gazeuse et liquide F2, F3 du fluide d'entrée F1 se pratique par gravité. Ce premier séparateur est rempli dans une partie inférieure par la phase liquide F2 séparée par gravité et dans une partie supérieure par la phase gazeuse F3 séparée par gravité. Le premier séparateur comprend :

- au moins une première ouverture d'entrée 111 aménagée sur une face latérale du premier séparateur et débouchant dans le premier séparateur,
- au moins une première ouverture de sortie 112 aménagée dans la partie inférieure du premier séparateur, débouchant dans le premier séparateur et assurant l'écoulement hors du premier séparateur uniquement de la phase liquide F2 séparée par gravité dans le premier séparateur,
- et au moins une deuxième ouverture de sortie 113 aménagée dans la partie supérieure du premier séparateur, débouchant dans le premier séparateur et assurant l'écoulement hors du premier séparateur uniquement de la phase gazeuse F3 séparée par gravité dans le premier séparateur.

Le flux diphasique d'entrée F1 entrant dans le rectifieur 10 provient de la partie dite « haute pression » de la machine à absorption en étant mis en mouvement par la poussée d'une pompe hydraulique située en amont, non représentée. Il y a également un effet d'accélération du flux dans le générateur 1 du fait de l'évaporation partielle du fluide.

La première fonction du rectifieur 10, via son premier séparateur, est donc de ralentir le flux diphasique d'entrée F1 pour séparer ses deux parties F2, F3 présentes en exploitant la force gravitaire. La première ouverture de sortie 112 est située sur un circuit hydraulique disposant en aval d'une vanne de laminage. La deuxième ouverture de sortie 113 est située sur un circuit hydraulique disposant en aval d'un détendeur 4 donnant sur le circuit basse pression de la machine. Il y a donc un phénomène d'aspiration sur ces deux ouvertures de sortie.

La deuxième fonction du rectifieur 10, via son premier séparateur, est de séparer proprement dit les phases liquide F2 et gazeuse F3 du fluide d'entrée F1 provenant du générateur 1, par l'utilisation uniquement de la gravité.

Une première conduite de raccordement 15, notamment sensiblement horizontale, est disposée entre l'entrée E du rectifieur 10 et la première ouverture d'entrée 111 du premier séparateur. Le fluide d'entrée F1 circule dans cette conduite 15. D'autre part, une deuxième conduite de raccordement 16, notamment sensiblement verticale, est disposée entre la deuxième ouverture de sortie 113 du premier séparateur et une entrée 121 du condenseur 12. Uniquement la phase gazeuse F3 séparée par gravité dans le premier séparateur circule dans cette conduite 16.

Pour ralentir le fluide d'entrée F1, le premier séparateur a pour effet d'agrandir la section de passage pour le fluide qui s'y déverse. Il permet de créer un volume tel que la phase gazeuse F3 ait une vitesse généralement inférieure à 0,5m/s, préférentiellement inférieure à 0,1m/s. L'ouverture d'entrée 111 du premier séparateur est notamment agencée à mi-hauteur du premier séparateur. Dans ce premier séparateur 11, il est maintenu un niveau de liquide F2 constant en régulant la vanne de laminage située en aval de la sortie S1, sur la ligne de retour de liquides vers l'absorbeur. Ceci permet de maintenir un effet de « bouchon » liquide pour la phase gazeuse F3 d'une manière décrite plus en détail plus loin, tout en évitant au liquide de la partie F2 de déborder hors du premier séparateur par l'ouverture de sortie 113. La pression à la surface libre de la phase liquide F2 dans ce premier séparateur 11 est notée P1. Le premier séparateur ne comporte avantageusement aucune mise en oeuvre particulière à l'intérieur. Son volume peut être très faible en réduisant sa hauteur puisqu'il n'y a pas de fonction d'échange. Il s'agit donc avantageusement d'une pièce de chaudronnerie classique dont la production industrielle ne pose pas de problème particulier.

La phase gazeuse F3 séparée par le premier séparateur 11 doit ensuite être rectifiée, c'est-à-dire refroidie et partiellement condensée à travers le condenseur 12.

Le condenseur 12 peut avantageusement être constitué par un échangeur thermique et est obligatoirement disposé plus haut que la ligne de base des premier et deuxième séparateurs 11, 13. Il utilise alors un fluide repéré F8 en échange thermique avec la phase gazeuse F3 et avec les fractions condensée F5 et non condensée F6. Il s'agit par exemple d'un échangeur à plaques industriel de petite taille par rapport aux autres échangeurs thermiques utilisés dans la machine thermodynamique à absorption. Ceci est possible grâce à l'externalisation de la fonction de rectification par rapport au séparateur. En effet, il est rappelé que contrairement à l'art antérieur, les premier et deuxième séparateurs 11, 13 sont des éléments distincts du condenseur 12. Toutefois, tout autre organe condenseur peut être envisagé. Il sera toutefois pris soin de vérifier que la phase liquide F2 issue de la séparation réalisée dans le premier séparateur 11 ne soit pas refroidie par le condenseur 12.

Le condenseur 12 comprend une sortie 122, notamment située plus bas que l'entrée 121 du condenseur 12, avec un écoulement fluidique gravitaire dans le condenseur 12. La sortie 122 permet l'écoulement du fluide F4 hors du condenseur 12.

La pression du fluide à l'entrée 121 du condenseur 12 est notée P2, qui est inférieure à la pression P1 en raison des pertes de charge par frottement dépendant du carré de la vitesse du fluide F3 et du travail des forces de gravité dépendant de la masse volumique multipliée par la différence d'altitude et par l'accélération de la pesanteur (ou constante de gravité notée classiquement « g »).

Ainsi, il a été démontré l'équation 1 suivante liant P1 et P2 :

$$P2 = P1 - \rho_{12} \cdot g \cdot \Delta z_{12} - \Lambda_{12} \cdot \frac{L_{12}}{D_{h-12}} \cdot \frac{\rho_{12} \cdot u_{12}^{2}}{2}$$

Où g est la constante gravitationnelle en $m.s^{-2}$, $\rho_{12}$ est la masse volumique en $kg/m^3$ de la phase gazeuse F3 située entre la surface libre de la phase liquide F2 séparée par le premier séparateur 11 et l'entrée 121 du condenseur 12, $\Delta z_{12}$ est la différence d'altitude en m entre la surface libre de la phase liquide F2 séparée par le premier séparateur 11 et l'entrée 121 du condenseur 12, $\Lambda_{12}$ est le coefficient de frottement visqueux sans unité et $L_{12}$ est la distance en m entre la surface libre de la phase liquide F2 séparée par le premier séparateur 11 et l'entrée 121 du condenseur 12, $D_{h-12}$ est le diamètre hydraulique en m de la conduite de raccordement 16 entre le premier séparateur 11 et le condenseur 12, $u_{12}$ est la vitesse d'écoulement en $m.s^{-1}$ de la phase gazeuse F3 entre le premier séparateur 11 et le condenseur 12.

*Dans tous les cas, la troisième fonction du rectifieur 10, via le condenseur 12, est de réaliser une condensation partielle de la phase gazeuse F3 séparée par le premier séparateur 11, pour récupérer le plus possible d'absorbant encore contenu dans la phase gazeuse F3 préalablement séparée par le premier séparateur 11.

La pression du fluide F4 à la sortie 122 du condenseur 12 est notée P3 qui est inférieure à P2 en raison de la perte de charge au sein du condenseur 12, mais la gravité et le ralentissement du flux modèrent cet écart de pression. Il a été démontré que l'équation 2 suivante lie P2 et P3 en première approximation, en utilisant une densité moyenne pour le terme de gravité :

$$P3 = P2 - \Delta P_{\acute{e}changeur} + \left( \frac{\rho_{12} + \rho_{34}}{2} \right) \cdot g \cdot \Delta z_{23} + \frac{\rho_{12}.u_{12}^{2}}{2} - \frac{\rho_{34}.u_{34}^{2}}{2}$$

Où $\Delta z_{23}$ est la différence d'altitude en m entre l'entrée 121 et la sortie 122 du condenseur 12, $\Delta P_{\acute{e}changeur}$ est la perte de charge en Pa subie à travers le condenseur 12, $\rho_{34}$ est la masse volumique en $kg/m^3$ et $u_{34}$ est la vitesse d'écoulement en $m.s^{-1}$ de la fraction non condensée F6 entre la sortie 122 du condenseur 12 et la surface libre de la fraction condensée F5 au sommet de la colonne de liquide.

Avantageusement, dans les trois modes de réalisation illustrés, le deuxième séparateur 13 est constitué par un deuxième séparateur distinct du premier séparateur, dans lequel la séparation entre la fraction condensée F5 et la fraction restante non condensée F6 par le condenseur 12 se pratique par gravité. Le deuxième séparateur comprend :

- au moins une ouverture d'entrée 131 aménagée sur une face latérale du deuxième séparateur et débouchant dans le deuxième séparateur,
- au moins une première ouverture de sortie 132 aménagée dans une partie inférieure du deuxième séparateur, débouchant dans le deuxième séparateur,
- et au moins une deuxième ouverture de sortie 133 aménagée dans une partie supérieure du deuxième séparateur, débouchant dans le deuxième séparateur et assurant l'écoulement hors du deuxième séparateur uniquement de la fraction non condensée F6 séparée par gravité dans le deuxième séparateur.

La quatrième fonction du rectifieur 10, via le deuxième séparateur 13, est de séparer proprement dit les fractions condensée F5 et non condensée F6 à la sortie du condenseur 12, par l'utilisation uniquement de la gravité.

La cinquième fonction du rectifieur 10, via son dispositif de liaison, est de mélanger la phase liquide F2 séparée dans le premier séparateur 11 avec la fraction condensée F5 séparée par le deuxième séparateur 13. Ce mélange intervient avant la sortie du rectifieur 10.

Une troisième conduite de raccordement 17, par exemple sensiblement horizontale ou descendante en direction du deuxième séparateur, relie la sortie 122 du condenseur 12 à l'ouverture d'entrée 131 du deuxième séparateur. Les fractions condensée et non condensée F5, F6 par le condenseur 12 circulent conjointement dans cette conduite 17 et constituent le fluide repéré F4 diphasique. D'autre part, une quatrième conduite de raccordement 18 est disposée entre la deuxième sortie S2 du rectifieur 10 et la deuxième ouverture de sortie 133 du deuxième séparateur. La fraction non condensée F6 séparée par gravité dans le deuxième séparateur circule dans cette quatrième conduite 18.

Comme hypothèse simplificatrice, le flux liquide F5 condensé en sortie du condenseur 12 n'est pas prise en compte pour le calcul de $\rho_{34}$, lorsque ce terme intervient dans les termes de gravité et de vitesse. En effet, la fraction condensée F5 ne génère pas de variation de pression notable puisqu'elle est soit un régime d'écoulement de paroi à fort frottement limitant sa vitesse dans la troisième conduite, soit elle est emportée par la fraction non condensée gazeuse F6 très fortement majoritaire en volume.

Dans les trois modes de réalisation, le dispositif de liaison comprend une cinquième conduite de raccordement 19 disposée entre la première sortie S1 du rectifieur 10 et la première ouverture de sortie 112 du premier séparateur. Elle est notamment sensiblement verticale à proximité du premier séparateur et permet la circulation de la phase liquide F2 séparée par gravité dans le premier séparateur en direction de la première sortie S1. Le dispositif de liaison comprend aussi une sixième conduite de raccordement 20 s'étendant depuis la première ouverture de sortie 132 du deuxième séparateur jusqu'à :

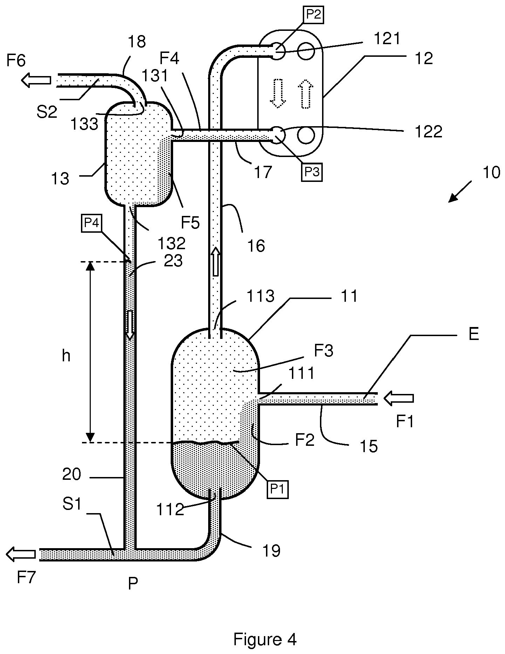

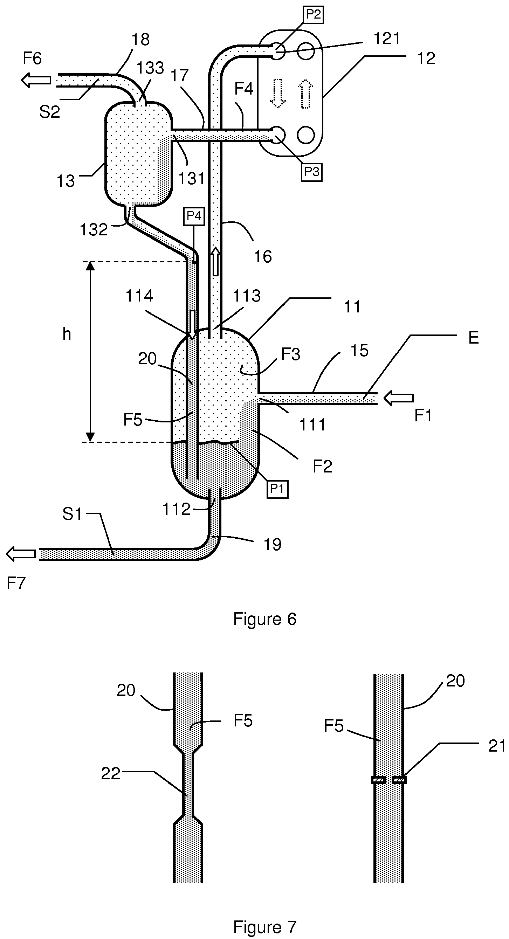

- soit un point de connexion P à la cinquième conduite de raccordement 19 situé plus bas que le premier séparateur (ce qui correspond au deuxième mode de réalisation de la figure 4),
- soit une deuxième ouverture d'entrée 114 du premier séparateur débouchant dans le premier séparateur (ce qui correspond au premier mode de réalisation de la figure 3 ou au troisième mode de réalisation de la figure 6).

La sixième conduite de raccordement 20 est notamment sensiblement verticale à proximité du deuxième séparateur auquel elle est raccordée.

Dans le premier mode de réalisation de la figure 3, la deuxième ouverture d'entrée 114 du premier séparateur est aménagée dans la partie inférieure du premier séparateur de sorte à déboucher dans le premier séparateur en dessous d'une surface libre de la phase liquide F2 séparée par gravité dans le premier séparateur et contenue dans la partie inférieure du premier séparateur.

La « surface libre » de la phase liquide F2 dans le premier séparateur correspond à l'interface entre la phase liquide F2 et la phase gazeuse F3 contenues conjointement dans le premier séparateur respectivement en partie inférieure et en partie supérieure du premier séparateur.

Par contre dans le troisième mode de réalisation de la figure 6, la deuxième ouverture d'entrée 114 du premier séparateur est aménagée dans la partie supérieure du premier séparateur, au-dessus de la surface libre de la phase liquide F2. La sixième conduite de raccordement 20 se prolonge à l'intérieur du premier séparateur au-delà de la deuxième ouverture d'entrée 114 du premier séparateur, jusqu'à déboucher en dessous de la surface libre de la phase liquide F2 séparée par gravité dans le premier séparateur et contenue dans la partie inférieure du premier séparateur.

Dans chacun des trois modes de réalisation, au moins une partie de la cinquième conduite de raccordement 19 et/ou de la sixième conduite de raccordement 20 s'étend en dessous de la surface libre de la phase liquide F2 séparée par gravité dans le premier séparateur et contenue dans la partie inférieure du premier séparateur. Ceci favorise l'effet de siphon formé par le dispositif de liaison.

Avantageusement, l'ensemble est configuré pour que la section de passage du premier séparateur et/ou de la cinquième conduite de raccordement 19 soit dimensionnée de sorte que la phase liquide F2 séparée par gravité dans le premier séparateur forme un effet de bouchon pour la phase gazeuse F3 séparée par gravité dans le premier séparateur, en direction de la première sortie S1 du rectifieur 10.

En complément, l'ensemble est configuré pour que la section de passage du deuxième séparateur et/ou de la sixième conduite de raccordement 20 soit avantageusement dimensionnée de sorte que la fraction condensée F5 séparée par gravité dans le deuxième séparateur forme un effet de bouchon pour la fraction non condensée F6 séparée par gravité dans le deuxième séparateur, en direction de la première sortie S1 du rectifieur 10.

Ces deux effets de bouchons pour les gaz contenus dans les premier et deuxième séparateurs favorisent la constitution du siphon formé par le dispositif de liaison. Ceci correspond à une sixième fonction du rectifieur 10. Ainsi, le dispositif de liaison met en communication fluidique la phase liquide F2 séparée par le premier séparateur 11 et la fraction condensée F5 séparée par le deuxième séparateur 13 d'une manière bloquant toute circulation de la phase gazeuse F3 séparée par le premier séparateur 11 à travers le dispositif de liaison et toute circulation de la fraction non condensée F6 séparée par le deuxième séparateur 13 à travers le dispositif de liaison. Le dispositif de liaison étant en communication avec la première sortie S1, il permet d'inhiber la circulation de la phase gazeuse F3 séparée par le premier séparateur 11 et la circulation de la fraction non condensée F6 séparée par le deuxième séparateur 13, en direction de la première sortie S1.

Dans les trois modes de réalisation, le dispositif de liaison est configuré de sorte à maintenir une colonne de liquide 23 formée en tout ou partie par la fraction condensée F5 séparée par le deuxième séparateur 13. La colonne de liquide 23 est en communication fluidique avec la phase liquide F2 séparée par le premier séparateur 11. Le deuxième séparateur 13 est disposé plus haut que le premier séparateur 11 grâce à une conception adaptée du dispositif de liaison, ce dernier étant tel que la différence d'altitude entre les premier et deuxième séparateurs 11, 13 est supérieure à la hauteur h de la colonne de liquide 23. Ces dispositions favorisent la constitution du siphon formé par le dispositif de liaison. Il s'agit d'une septième fonction du rectifieur 10.

Dans le deuxième mode de réalisation où la sixième conduite de raccordement 20 est reliée à un point de connexion P de la cinquième conduite 19 situé plus bas que le premier séparateur, la sixième conduite 20 est remplie par la colonne de liquide 23. Les avantages de ce mode de réalisation sont que le travail de chaudronnerie sur le premier séparateur 11 est simplifié. Il suffit au contraire d'ajouter un té de raccordement entre les cinquième et sixième conduites 19, 20, un tel té étant très classique en tuyauterie et peu onéreux. D'autre part, la partie horizontale de la cinquième conduite 19 est parcourue par le flux liquide principal, ce qui favorise l'emportement d'éventuelles poches de gaz du fait du débit liquide important.

Il convient de préciser que l'alimentation de la cinquième conduite 19 dans la partie inférieure du premier séparateur 11 doit être liquide. En cas de désamorçage du liquide F2 et si une poche de gaz circule en aval du premier séparateur 11 dans la cinquième conduite 19, ce gaz ne remontera pas nécessairement dans la colonne 23 pour être évacué, ce qui est susceptible de perturber la vanne de laminage sur le circuit de retour normalement liquide en aval du rectifieur 10 et alimenté par la première sortie S1. D'autre part, le débit de la fraction condensée F5 dans le rectifieur 10 est généralement au moins dix fois inférieur au débit de la phase liquide F2. L'accélération du flux constaté crée un effet de dépression à la confluence au point P, ce qui tend à baisser la hauteur de la colonne de liquide 23. Il a été montré que cet effet est de l'ordre du millimètre, donc peu important lorsque les sections des conduites 19, 20 sont identiques.

Les avantages du troisième mode de réalisation où la sixième conduite 20 s'étend à l'intérieur du premier séparateur au-delà de l'ouverture d'entrée 114, sont par contre les suivants :

- le rectifieur 10 ne peut pas contenir de poche de gaz puisqu'il n'y a aucune tubulure horizontale entre le premier séparateur et la colonne de liquide 23,
- le risque de désamorçage de la colonne de liquide 23 est très réduit, tant que le niveau de la phase liquide F2 dans le premier séparateur 11 est suffisant,
- les travaux de chaudronnerie sont simples.

La pression de la fraction condensée F5 au sommet de la colonne de liquide 23 est notée P4. L'écoulement entre les points du rectifieur 10 correspondant aux pressions P3 et P4 est principalement gravitaire pour la fraction liquide condensée F5. La fraction gazeuse non condensée F6 augmente légèrement de pression en raison de la gravité, mais cela ne génère pas d'écoulement dans la colonne de liquide 23 puisque celle-ci est remplie de liquide, formant ainsi l'effet de « bouchon ». Par contre, la fraction non condensée F6 subit un effet d'aspiration par la conduite dirigée vers le condenseur 3 en aval du rectifieur 10 car en aval du condenseur 3, un détendeur 4 relie le flux à la partie basse pression de la machine.

En négligeant les frottements visqueux en raison de la faible longueur de la conduite 17, il peut être démontré l'équation 3 suivante liant P3 et P4 :

$$P4 = P3 + \rho_{34} \cdot g \cdot \Delta z_{34}$$

Où $\Delta z_{34}$ est la différence d'altitude entre la sortie 122 du condenseur 12 et la surface libre de la fraction condensée F5 au sommet de la colonne de liquide 23.

La colonne de liquide 23 doit donc être dimensionnée pour compenser l'écart de pression calculé par les équations précédentes. L'écart de pression entre P1 et P4, en négligeant les frottements visqueux en raison de la très faible vitesse du flux, est donné par l'équation 4 suivante :

$$P4 = P1 - \rho_{liquide} \cdot g \cdot h$$

où $\rho_{liquide}$ est la masse volumique en $kg/m^3$ de la phase liquide F2 séparée par le premier séparateur 11 et de la fraction condensée F5 séparée par le deuxième séparateur 13.

En fonction de la nature du réfrigérant et de l'absorbant, le rectifieur 10 est conçu de sorte que la différence d'altitude entre les premier et deuxième séparateurs 11, 13 est supérieure à la hauteur h attendue de la colonne de liquide 23 calculée par l'équation 5 suivante :

$$h = \frac{g \cdot \left( \rho_{12} \cdot \Delta z_{12} - \left( \frac{\rho_{12} + \rho_{34}}{2} \right) \cdot \Delta z_{23} - \rho_{34} \cdot \Delta z_{34} \right) + \Lambda_{12} \cdot \frac{L_{12}}{D_{h-12}} \cdot \frac{\rho_{12} \cdot u_{12}^{2}}{2} + \Delta P_{\text{échangeur}} - \frac{\rho_{12} \cdot u_{12}^{2}}{2} + \frac{\rho_{34} \cdot u_{34}^{2}}{2}}{\rho_{\text{liquide}} \cdot g}$$

où h est la hauteur de la colonne liquide 23 entre la surface libre de la fraction condensée F5 séparée par le deuxième séparateur 13 et la surface libre de la phase liquide F2 séparée par le premier séparateur 11.

L'équation 5 est établie à partir des équations 1 à 4 précédentes.

La « surface libre » de la fraction condensée F5 dans la sixième conduite de raccordement 20 ou dans le deuxième séparateur correspond à l'interface entre la fraction condensée F5 et la fraction non condensée F6 contenues conjointement soit dans la sixième conduite de raccordement 20, soit dans le deuxième séparateur.

Une application numérique a été réalisée pour les conditions suivantes :

| Grandeur | unité | valeur |
|---|---|---|
| $T_{12}$ | °C | 76 |
| $T_{34}$ | °C | 51.3 |
| P1 | bar | 11.76 |
| $x_{12}$ (gaz) | $kg_{NH3}$/kg | 0.985 |
| $x_{34}$ (gaz) | $kg_{NH3}$/kg | 0.9978 |
| $x_{14}$ (liquide) | $kg_{NH3}$/kg | 0.6316 |
| $\Delta z_{12}$ | m | 1 |
| $\Delta z_{23}$ | m | 0.157 |
| $u_{12}$ | m/s | 7.58 |
| $u_{34}$ | m/s | 6.90 |
| $Dh_{12}=Dh_{34}$ | m | 0.01 |
| $\Delta P_{\text{échangeur}}$ | Pa | 4500 |

Où $T_{12}$ est la température entre les points de pression P1 et P2, $T_{34}$ est la température entre les points de pression P3 et P4, $x_{12}$ est le pourcentage de réfrigérant dans la phase gazeuse F3 entre les points de pression P1 et P2, $x_{34}$ est le pourcentage de réfrigérant dans la fraction non condensée F6 entre les points de pression P3 et P4, $x_{14}$ est le pourcentage d'absorbant dans le liquide entre les points de pression P1 et P4, et $Dh_{34}$ est le diamètre hydraulique de la troisième conduite de raccordement 17.

En appliquant ces conditions, il a été simulé que la hauteur h est égale à 0,684m. Ainsi, le rectifieur 10 fonctionne pour toute différence d'altitude entre les premier et deuxième séparateurs 11 et 13 supérieure à cette hauteur h.

L'application numérique permet de montrer que le terme gravitaire du gaz au numérateur de l'équation 5 est faible par rapport aux autres termes. D'autre part, elle montre que l'influence de la variation de vitesse du flux sur la pression est très faible. Ainsi, la différence d'altitude entre les premier et deuxième séparateurs 11, 13 doit être supérieure à la hauteur h attendue de la colonne de liquide 23 estimée par l'équation 6 suivante, qui est une simplification de l'équation 5 :

$$h \approx \frac{\Lambda_{12} \cdot \frac{L_{12}}{D_{h-12}} \cdot \frac{\rho_{12} \cdot u_{12}^{2}}{2} + \Delta P_{\text{échangeur}}}{\rho_{\text{liquide}} \cdot g}$$

Ainsi, pour une machine bien dimensionnée, quelle que soit sa puissance, la vitesse u et le $\Delta P_{\text{échangeur}}$ ont des valeurs relativement constantes, et donc c'est également le cas de la hauteur h.

Un condenseur 12 utilisant un échangeur à plaques parallèles tel que représenté n'est pas limitatif. La perte de charge de cet échangeur peut influer fortement sur la hauteur h nécessaire. On peut donc sélectionner ce composant sur un critère économique par exemple, tant que les performances thermiques sont atteintes, sachant qu'il s'agit en général du plus petit échangeur de la machine à absorption.

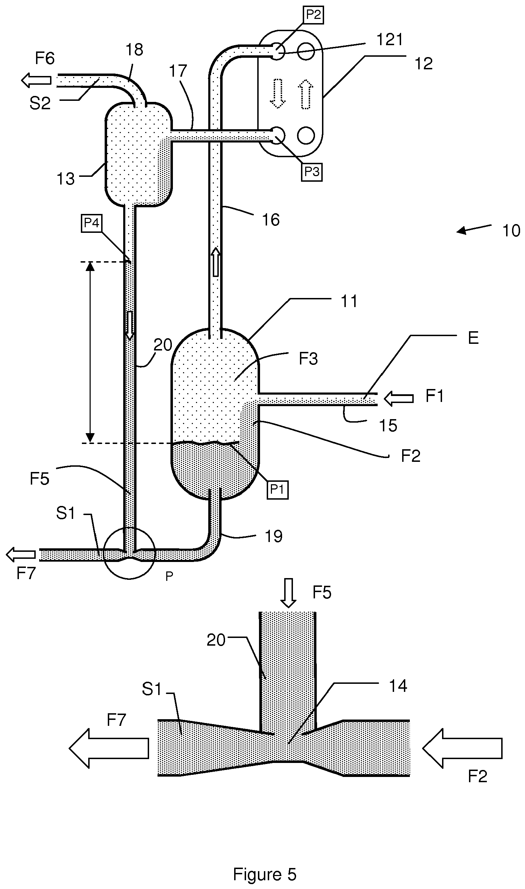

Le deuxième mode de réalisation peut mettre en oeuvre une variante (figure 5) où le dispositif de liaison 19, 20 comprend avantageusement un système d'aspiration 14, notamment par un effet de Venturi, aménagé au point de connexion P et configuré de sorte à aspirer la fraction condensée F5 séparée par le deuxième séparateur 13 à l'intérieur de la sixième conduite de raccordement 20 dans un sens opposé au sens conduisant au deuxième séparateur.

Un tel système d'aspiration 14 permet de diminuer la hauteur h de la colonne de liquide 23 dans le but d'augmenter la compacité du rectifieur 10. Pour diminuer cette hauteur h, le système d'aspiration 14 permet de créer un effet d'aspiration à la base de la colonne de liquide 23.

Les avantages de l'agencement d'un tel système d'aspiration 14 sont les suivants :

- une réduction de la hauteur h de la colonne de liquide 23 nécessaire, donc l'encombrement global du rectifieur 10 peut être amélioré,
- dans le cas où la machine à absorption fonctionne à puissance variable, les débits fluidiques doivent pouvoir varier en fonction : en l'absence du système 14, lorsque le débit augmente, les pertes de charge liées au réfrigérant augmentent et donc la hauteur h de la colonne 23 augmente pour les compenser ; par contre, l'aspiration due au système 14 réduit la hauteur h de la colonne 23 dans des proportions comparables, ce qui stabilise la hauteur h, notamment dans le cas où les débits liquide et gazeux sont corrélés, améliorant la compacité ainsi que la flexibilité au niveau du point de fonctionnement de la machine à absorption,
- la perte de pression statique du système 14 reste limitée et non gênante dans le cadre de l'absorption sous pression car il est placé en amont d'une vanne de laminage réglable.

La variation de pression dynamique $\Delta P_{venturi}$ exprimée en Pa à travers le système 14 à effet Venturi est donnée par l'équation 7 suivante :

$$\Delta P_{venturi} = \frac{q_m^2}{2 \cdot \rho}\left(\frac{1}{S_1^2} - \frac{1}{S_2^2}\right)$$

Où $S_1$ et $S_2$ sont les sections de passage exprimées en m2 respectivement au niveau de la section large du tube Venturi et de la section étroite du tube Venturi, $q_m$ est le débit massique du fluide et p sa masse volumique.

En considérant les mêmes conditions numériques que précédemment évoquées, le diamètre de la cinquième conduite 19 est de 10mm. Il est couramment admis que le rapport entre le petit diamètre et le grand diamètre du tube à effet Venturi doit être au moins égal à 0,4. Le petit diamètre doit donc être supérieur 4mm dans le présent exemple. Ces deux valeurs permettent de calculer les deux sections de passage $S_1$ et $S_2$. La masse volumique est calculée pour l'exemple non limitatif d'une solution saturée d'ammoniac et d'eau aux températures et aux pressions citées précédemment. Le débit massique $q_m$ est de 52,6kg/h. La valeur de la variation de pression dynamique est alors de 835Pa. En comptant la perte de pression statique due à la forme du cône convergeant du tube à effet Venturi, la variation de pression totale permet de diminuer la hauteur h de la colonne de liquide 23 de 0,12m.

Le troisième mode de réalisation peut mettre en oeuvre une variante (figure 7) où la sixième conduite de raccordement 20 comprend un rétrécissement local de section linéaire 21 (partie de gauche de la figure 7) ou un rétrécissement local de section ponctuel 22 (partie de droite de la figure 7), notamment à proximité du deuxième séparateur.

Cette variante permet d'éviter le désamorçage de la colonne de liquide 23 par un flux gazeux non souhaité. Le rétrécissement de section placé le long de la colonne de liquide 23, notamment en partie haute, permet qu'en conditions de désamorçage, le flux gazeux est suffisamment freiné dans la colonne de liquide 23 pour que le chemin préférentiel reste celui passant par le condenseur 12. Le rétrécissement de section est dimensionné de telle sorte que la perte de charge occasionnée est supérieure à celle constatée sur l'ensemble de la ligne passant par le condenseur 12. L'avantage de cette variante est que le passage du gaz dans la sixième conduite 20 en cas d'absence de colonne de liquide 23 est fortement défavorisé ; pour les phases de transition tel que le démarrage de la machine, cette amélioration représente un atout de sûreté de fonctionnement, puisque cela assure la circulation des flux dans le sens recherché pour chacun des flux F2 à F6.

Un tel résultat peut toutefois être obtenu par un dimensionnement adéquat de la section de passage de la sixième conduite de raccordement 20 : il est possible de créer la perte de charge recherchée dans la sixième conduite 20 pour un flux gazeux en choisissant un diamètre suffisamment petit sur toute sa longueur, permettant de réaliser un dispositif de liaison plus simple que la variante mettant en oeuvre le rétrécissement de section 21 ou 22, sans soudure ou sans raccord supplémentaire. Le diamètre de la sixième conduite 20 doit toutefois être suffisant pour éviter des remontées de liquide par capillarité.

Il ressort de ce qui précède que la présente invention consiste à exploiter un moyen formant un siphon pour réaliser conjointement l'implantation d'un condenseur réalisant la condensation nécessaire à la rectification sur la ligne gazeuse du circuit réfrigérant de la machine, et le drainage des condensats ainsi créés vers le circuit de retour vers l'absorbeur de la machine, tout en apportant un avantage certain en termes de volume par composant et en ne se basant que sur des composants simples ou industriels. Les deux séparations successives sont particulièrement simples à mettre en oeuvre au moyen de l'effet de la gravité dans les premier et deuxième séparateurs. Le siphon ainsi créé entre les deux séparateurs permet d'orienter tous les flux dans la direction souhaitée, de manière très simple.

La solution décrite précédemment, dans ses trois modes de réalisation et leurs variantes, présente les avantages supplémentaires suivants :

- tous les composants sont déjà industrialisés ou facilement industrialisables,
- le volume interne de chaque composant est particulièrement réduit ; ceci permet de bénéficier de contraintes réglementaires allégées au niveau de la directive européenne 97/23-CE,
- la quantité de fluide contenue dans le rectifieur est particulièrement réduite, ce qui représente un facteur économique positif,
- la maintenance nécessaire est faible, le rectifieur est robuste,
- il n'y a pas de contraintes particulières pour le fluide secondaire F8 utilisé dans le condenseur 12 : ce peut être soit un fluide externe, soit le fluide interne de la machine, via une dérivation d'une des branches,
- la différence de hauteur entre les composants 11, 12 et 13 est calculée pour un cas particulier et varie très peu en fonction de la puissance de la machine; la hauteur h du rectifieur 10 est en outre compatible avec les diverses tailles de machines couramment rencontrées,
- plusieurs types de condenseur 12 peuvent être utilisés.

## Revendications

1. Rectifieur (10) pour machine thermodynamique à absorption, comprenant une entrée (E) alimentant le rectifieur (10) en un fluide d'entrée diphasique (F1) ayant une phase liquide (F2) et une phase gazeuse (F3) et formé par un mélange entre un réfrigérant et un absorbant, **caractérisé en ce que** le rectifieur (10) comprend les éléments distincts suivants :

   - un premier séparateur (11) assurant une séparation entre la phase liquide (F2) et la phase gazeuse (F3) du fluide d'entrée (F1),
   - un condenseur (12) condensant une fraction (F5) de la phase gazeuse (F3) séparée par le premier séparateur (11), **caractérisé par**
   - un deuxième séparateur (13) assurant une séparation entre la fraction condensée (F5) par le condenseur (12) et une fraction restante non condensée (F6) par le condenseur (12),
   - et un dispositif de liaison (20) reliant les premier et deuxième séparateurs (11, 13) et configuré de sorte à former un siphon pour la phase liquide (F2) séparée par le premier séparateur (11) et pour la fraction condensée (F5) séparée par le deuxième séparateur (13).

2. Rectifieur (10) selon la revendication 1, **caractérisé en ce que** le dispositif de liaison (20) met en communication fluidique la phase liquide (F2) séparée par le premier séparateur (11) et la fraction condensée (F5) séparée par le deuxième séparateur (13) d'une manière bloquant une circulation de la phase gazeuse (F3) séparée par le premier séparateur (11) et une circulation de la fraction non condensée (F6) séparée par le deuxième séparateur (13) à travers le dispositif de liaison (20).

3. Rectifieur (10) selon la revendication 2, **caractérisé en ce que** le dispositif de liaison (20) inhibe la circulation de la phase gazeuse (F3) séparée par le premier séparateur (11) et la circulation de la fraction non condensée (F6) séparée par le deuxième séparateur (13), en direction d'une première sortie (S1) du rectifieur (10) évacuant hors du rectifieur (10) un mélange réalisé dans le dispositif de liaison (20) entre la phase liquide (F2) séparée par le premier séparateur (11) et la fraction condensée (F5) séparée par le deuxième séparateur (13).

4. Rectifieur (10) selon l'une des revendications précédentes, **caractérisé en ce que en ce que** le dispositif de liaison (20) est configuré de sorte à maintenir une colonne de liquide (23) formée en tout ou partie par la fraction condensée (F5) séparée par le deuxième séparateur (13), ladite colonne de liquide (23) étant en communication fluidique avec la phase liquide (F2) séparée par le premier séparateur (11) et, optionnellement, **en ce que** le deuxième séparateur (13) est disposé plus haut que le premier séparateur (11), la différence d'altitude entre les premier et deuxième séparateurs (11, 13) étant supérieure à la hauteur (h) de ladite colonne de liquide (23).

5. Rectifieur (10) selon la revendication 4, **caractérisé en ce que** la différence d'altitude entre les premier et deuxième séparateurs est supérieure à la hauteur (h) de ladite colonne de liquide (23) calculée par la formule suivante :

$$h = \frac{g \cdot \left( \rho_{12} \cdot \Delta z_{12} - \left( \frac{\rho_{12} + \rho_{34}}{2} \right) \cdot \Delta z_{23} - \rho_{34} \cdot \Delta z_{34} \right) + \Lambda_{12} \cdot \frac{L_{12}}{D_{h-12}} \cdot \frac{\rho_{12} \cdot u_{12}^{2}}{2} + \Delta P_{\text{échangeur}} - \frac{\rho_{12} \cdot u_{12}^{2}}{2} + \frac{\rho_{34} \cdot u_{34}^{2}}{2}}{\rho_{\text{liquide}} \cdot g}$$

où h est la hauteur de la colonne liquide (23) entre la surface libre de la fraction condensée (F5) séparée par le deuxième séparateur (13) et la surface libre de la phase liquide (F2) séparée par le premier séparateur (11), g est la constante gravitationnelle, $\rho_{12}$ est la masse volumique en kg/m$^3$ de la phase gazeuse (F3) située entre la surface libre de la phase liquide (F2) séparée par le premier séparateur (11) et l'entrée (121) du condenseur (12), $\Delta z_{12}$ est la différence d'altitude entre la surface libre de la phase liquide (F2) séparée par le premier séparateur (11) et l'entrée (121) du condenseur (12), $\Lambda_{12}$ est le coefficient de frottement visqueux et $L_{12}$ est la distance entre la surface libre de la phase liquide (F2) séparée par le premier séparateur (11) et l'entrée (121) du condenseur (12), $D_{h-12}$ est le diamètre de la conduite de raccordement (16) entre le premier séparateur (11) et le condenseur (12), $u_{12}$ est la vitesse d'écoulement de la phase gazeuse (F3) entre le premier séparateur (11) et le condenseur (12), $\Delta z_{23}$ est la différence d'altitude entre l'entrée (121) et la sortie (122) du condenseur (12), $\Delta P_{\text{échangeur}}$ est la perte de charge subie à travers le condenseur (12), $\rho_{34}$ est la masse volumique en kg/m$^3$ et $u_{34}$ est la vitesse d'écoulement de la fraction non condensée (F6) entre la sortie (122) du condenseur (12) et la surface libre de la fraction condensée (F5) au sommet de la colonne de liquide, $\Delta z_{34}$ est la différence d'altitude entre la sortie (122) du condenseur (12) et la surface libre de la fraction condensée (F5) au sommet de la colonne de liquide, $\rho_{\text{liquide}}$ est la masse volumique en kg/m$^3$ de la phase liquide (F2) séparée par le premier séparateur (11) et de la fraction condensée (F5) séparée par le deuxième séparateur (13).

6. Rectifieur (10) selon l'une des revendications 4 ou 5, **caractérisé en ce que** la différence d'altitude entre les premier et deuxième séparateurs (11, 13) est supérieure à la hauteur (h) de ladite colonne de liquide (23) estimée par l'équation suivante :

$$h \approx \frac{\Lambda_{12} \cdot \frac{L_{12}}{D_{h-12}} \cdot \frac{\rho_{12} \cdot u_{12}^{2}}{2} + \Delta P_{\text{échangeur}}}{\rho_{\text{liquide}} \cdot g}$$

7. Rectifieur (10) selon l'une des revendications 1 à 6, **caractérisé en ce que** le condenseur (12) est disposé plus haut que la base des premier et deuxième séparateurs (11, 13) et/ou **en ce que** le condenseur (12) est constitué par un échangeur thermique.

8. Rectifieur (10) selon l'une des revendications 1 à 7, **caractérisé en ce que** le rectifieur (10) comprend une deuxième sortie (S2) distincte de la première sortie (S1) et évacuant hors du rectifieur (10) la fraction non condensée (F6) séparée par le deuxième séparateur (13).

9. Rectifieur (10) selon l'une des revendications 1 à 8, **caractérisé en ce que** le premier séparateur (11) est constitué par un premier séparateur dans lequel la séparation entre les parties gazeuse et liquide (F2, F3) du fluide d'entrée (F1) se pratique par gravité, ledit premier séparateur étant rempli dans une partie inférieure par la phase liquide (F2) séparée par gravité et dans une partie supérieure par la phase gazeuse (F3) séparée par gravité, le premier séparateur comprenant :

- au moins une première ouverture d'entrée (111) aménagée sur une face latérale du premier séparateur et débouchant dans le premier séparateur,
- au moins une première ouverture de sortie (112) aménagée dans la partie inférieure du premier séparateur, débouchant dans le premier séparateur et assurant l'écoulement hors du premier séparateur uniquement de la phase liquide (F2) séparée par gravité dans le premier séparateur,
- et au moins une deuxième ouverture de sortie (113) aménagée dans la partie supérieure du premier séparateur, débouchant dans le premier séparateur et assurant l'écoulement hors du premier séparateur uniquement de la phase gazeuse (F3) séparée par gravité dans le premier séparateur.

10. Rectifieur (10) selon la revendication 9, **caractérisé en ce que** le rectifieur (10) comprend :

- une première conduite de raccordement (15), notamment sensiblement horizontale, disposée entre l'entrée (E) du rectifieur (10) et la première ouverture d'entrée (111) du premier séparateur et dans laquelle le fluide d'entrée (F1) circule,
- une deuxième conduite de raccordement (16), notamment sensiblement verticale, disposée entre la deuxième ouverture de sortie (113) du premier séparateur et une entrée (121) du condenseur (12) et dans laquelle circule la phase gazeuse (F3) séparée par gravité dans le premier séparateur.

**11.** Rectifieur (10) selon l'une des revendications 1 à 10, **caractérisé en ce que** le deuxième séparateur (13) est constitué par un deuxième séparateur distinct du premier séparateur, dans lequel la séparation entre la fraction condensée (F5) et la fraction restante non condensée (F6) par le condenseur (12) se pratique par gravité, ledit deuxième séparateur comprenant :

- au moins une ouverture d'entrée (131) aménagée sur une face latérale du deuxième séparateur et débouchant dans le deuxième séparateur,
- au moins une première ouverture de sortie (132) aménagée dans une partie inférieure du deuxième séparateur, débouchant dans le deuxième séparateur,
- et au moins une deuxième ouverture de sortie (133) aménagée dans une partie supérieure du deuxième séparateur, débouchant dans le deuxième séparateur et assurant l'écoulement hors du deuxième séparateur uniquement de la fraction non condensée (F6) séparée par gravité dans le deuxième séparateur.

**12.** Rectifieur (10) selon la revendication 11, **caractérisé en ce que** le rectifieur (10) comprend :

- une troisième conduite de raccordement (17), notamment sensiblement horizontale, reliant une sortie (122) du condenseur (12) notamment située plus bas que l'entrée (121) du condenseur (12), à l'ouverture d'entrée (131) du deuxième séparateur, dans laquelle circulent conjointement les fractions condensée et non condensée (F5, F6) par le condenseur (12),
- une quatrième conduite de raccordement (18) disposée entre la deuxième sortie (S2) du rectifieur (10) et la deuxième ouverture de sortie (133) du deuxième séparateur, dans laquelle circule la fraction non condensée (F6) séparée par gravité dans le deuxième séparateur.

**13.** Rectifieur (10) selon les revendications 9 ou 10 et 11 ou 12, **caractérisé en ce que** le dispositif de liaison (20) comprend :

- une cinquième conduite de raccordement (19), notamment sensiblement verticale à proximité du premier séparateur, disposée entre la première sortie (S1) du rectifieur (10) et la première ouverture de sortie (112) du premier séparateur, dans laquelle circule la phase liquide (F2) séparée par gravité dans le premier séparateur,
- une sixième conduite de raccordement (20), notamment sensiblement verticale à proximité du deuxième séparateur, s'étendant depuis la première ouverture de sortie (132) du deuxième séparateur jusqu'à soit un point de connexion (P) à la cinquième conduite de raccordement (19) situé plus bas que le premier séparateur, soit une deuxième ouverture d'entrée (114) du premier séparateur débouchant dans le premier séparateur.

**14.** Rectifieur (10) selon la revendication 13, **caractérisé en ce que** :

- la sixième conduite de raccordement (20) étant raccordée à la cinquième conduite de raccordement (19), le dispositif de liaison (20) comprend un système d'aspiration (14), notamment par un effet de Venturi, aménagé audit point de connexion (P) et configuré de sorte à aspirer la fraction condensée (F5) séparée par le deuxième séparateur (13) à l'intérieur de la sixième conduite de raccordement (20) dans un sens opposé au deuxième séparateur, ou
- la deuxième ouverture d'entrée (114) du premier séparateur est aménagée dans la partie inférieure du premier séparateur de sorte à déboucher dans le premier séparateur en dessous de la surface libre de la phase liquide (F2) séparée par gravité dans le premier séparateur et contenue dans la partie inférieure du premier séparateur, ou
- la deuxième ouverture d'entrée (114) du premier séparateur est aménagée dans la partie supérieure du premier séparateur et **en ce que** la sixième conduite de raccordement (20) se prolonge à l'intérieur du premier séparateur au-delà de la deuxième ouverture d'entrée (114) du premier séparateur, jusqu'à déboucher en dessous de la surface libre de la phase liquide (F2) séparée par gravité dans le premier séparateur et contenue dans la partie inférieure du premier séparateur.

**15.** Rectifieur (10) selon l'une des revendications 13 ou 14, **caractérisé en ce que** la sixième conduite de raccordement (20) comprend un rétrécissement local de section (21, 22), linéaire ou ponctuel, notamment à proximité du deuxième séparateur, et/ou **en ce que** la section de passage du premier séparateur et/ou de la cinquième conduite de raccordement (19) est dimensionnée de sorte que la phase liquide (F2) séparée par gravité dans le premier séparateur forme un effet de bouchon pour la phase gazeuse (F3) séparée par gravité dans le premier séparateur, en direction de la première sortie (S1) du rectifieur (10), et/ou **en ce que** la section de passage du deuxième séparateur et/ou de la sixième conduite de raccordement (20) est dimensionnée de sorte que la fraction condensée (F5) séparée par gravité dans le deuxième séparateur forme un effet de bouchon pour la fraction non condensée (F6) séparée par gravité dans le deuxième séparateur, en direction de la première sortie (S1) du rectifieur (10).

**16.** Machine thermodynamique à absorption **caractérisée en ce qu'**elle comprend au moins un rectifieur (10) selon l'une quelconque des revendications précédentes.

**Patentansprüche**

**1.** Gleichrichter (10) für thermodynamische Absorptionsmaschine, umfassend einen Einlass (E), der den Gleichrichter (10) mit einem zweiphasigen Einlassfluid (F1) versorgt, das eine flüssige Phase (F2) und eine gasförmige Phase (F3) hat und von einem Gemisch zwischen einem Kühlmittel und einem Absorptionsmittel gebildet ist, **dadurch gekennzeichnet, dass** der Gleichrichter (10) die folgenden unterschiedlichen Elemente umfasst:

- einen ersten Separator (11), der eine Trennung zwischen der flüssigen Phase (F2) und der gasförmigen Phase (F3) des Einlassfluids (F1) sichert,
- einen Verdichter (12), der eine Fraktion (F5) der von dem ersten Separator (11) abgetrennten gasförmigen Phase (F3) verdichtet, **gekennzeichnet durch**
- einen zweiten Separator (13), der eine Trennung zwischen der von dem Verdichter (12) verdichteten Fraktion (F5) und einer verbliebenen, von dem Verdichter (12) nicht verdichteten Fraktion (F6) sichert,
- und eine Verbindungsvorrichtung (20), die den ersten und zweiten Separator (11, 13) verbindet und derart konfiguriert ist, dass für die von dem ersten Separator (11) abgetrennte flüssige Phase (F2) und für die von dem zweiten Separator (13) abgetrennte verdichtete Fraktion (F5) ein Siphon gebildet wird.

**2.** Gleichrichter (10) nach Anspruch 1, **dadurch gekennzeichnet, dass** die Verbindungsvorrichtung (20) die von dem ersten Separator (11) abgetrennte flüssige Phase (F2) und die von dem zweiten Separator (13) abgetrennte verdichtete Fraktion (F5) in einer Art in Fluidkommunikation versetzt, dass eine Zirkulation der von dem ersten Separator (11) abgetrennten gasförmigen Phase (F3) und eine Zirkulation der von dem zweiten Separator (13) abgetrennten nicht verdichteten Fraktion (F6) durch die Verbindungsvorrichtung (20) blockiert wird.

**3.** Gleichrichter (10) nach Anspruch 2, **dadurch gekennzeichnet, dass** die Verbindungsvorrichtung (20) die Zirkulation der von dem ersten Separator (11) abgetrennten gasförmigen Phase (F3) und die Zirkulation der von dem zweiten Separator (13) abgetrennten nicht verdichteten Fraktion (F6) in Richtung eines ersten Auslasses (S1) des Gleichrichters (10) hemmt, der aus dem Gleichrichter (10) ein in der Verbindungsvorrichtung (20) zwischen der von dem ersten Separator (11) abgetrennten flüssigen Phase (F2) und der von dem zweiten Separator (13) abgetrennten verdichteten Fraktion (F5) hergestelltes Gemisch ableitet.

**4.** Gleichrichter (10) nach einem der vorangehenden Ansprüche, **dadurch gekennzeichnet, dass** die Verbindungsvorrichtung (20) derart konfiguriert ist, dass eine Flüssigkeitssäule (23) aufrechterhalten wird, die vollständig oder teilweise von der von dem zweiten Separator (13) abgetrennten verdichteten Fraktion (F5) gebildet ist, wobei die Flüssigkeitssäule (23) in Fluidkommunikation mit der von dem ersten Separator (11) abgetrennten flüssigen Phase (F2) ist, und optional dadurch, dass der zweite Separator (13) höher als der erste Separator (11) angeordnet ist, wobei die Höhendifferenz zwischen dem ersten und zweiten Separator (11, 13) größer als die Höhe (h) der Flüssigkeitssäule (23) ist.

**5.** Gleichrichter (10) nach Anspruch 4, **dadurch gekennzeichnet, dass** die Höhendifferenz zwischen dem ersten und zweiten Separator größer als die Höhe (h) der Flüssigkeitssäule (23) ist, berechnet durch die folgende Formel:

$$h = \frac{g \cdot \left( \rho_{12} \cdot \Delta z_{12} - \left( \frac{\rho_{12} + \rho_{34}}{2} \right) \cdot \Delta z_{23} - \rho_{34} \cdot \Delta z_{34} \right) + \Lambda_{12} \cdot \frac{L_{12}}{D_{h-12}} \cdot \frac{\rho_{12} \cdot u_{12}^{2}}{2} + \Delta P_{Tauscher} - \frac{\rho_{12} \cdot u_{12}^{2}}{2} + \frac{\rho_{34} \cdot u_{34}^{2}}{2}}{p_{Fl\"ussigkeit} \cdot g}$$

wobei h die Höhe der Flüssigkeitssäule (23) zwischen der freien Oberfläche der von dem zweiten Separator (13) abgetrennten verdichteten Fraktion (F5) und der freien Oberfläche der von dem ersten Separator (11) abgetrennten flüssigen Phase (F2) ist, g die Gravitationskonstante ist, $p_{12}$ die Volumenmasse in $kg/m^3$ der gasförmigen Phase (F3) zwischen der freien Oberfläche der von dem ersten Separator (11) abgetrennten flüssigen Phase (F2) und dem Einlass (121) des Verdichters (12) ist, $\Delta z_{12}$ die Höhendifferenz zwischen der freien Oberfläche der von dem ersten Separator (11) abgetrennten flüssigen Phase (F2) und dem Einlass (121) des Verdichters (12) ist, $\Lambda_{12}$ der Koeffizient der viskosen Reibung ist und $L_{12}$ der Abstand zwischen der freien Oberfläche der von dem ersten Separator (11) abgetrennten flüssigen Phase (F2) und dem Einlass (121) des Verdichters (12) ist, $D_{h-12}$ der Durchmesser der Anschlussleitung (16) zwischen dem ersten Separator (11) und dem Verdichter (12) ist, $u_{12}$ die Strömungsgeschwindigkeit der gasförmigen Phase (F3) zwischen dem ersten Separator (11) und dem Verdichter (12) ist, $\Delta z_{23}$ die Höhendifferenz zwischen dem Einlass (121) und dem Auslass (122) des Verdichters (12) ist, $\Delta P_{Tauscher}$ der durch den Verdichter (12) aufgetretene Lastverlust ist, $p_{34}$ die Volumenmasse in $kg/m^3$ ist und $u_{34}$ die Strömungsgeschwindigkeit der nicht verdichteten Fraktion (F6) zwischen dem Auslass (122) des Verdichters (12) und der freien Oberfläche der verdichteten Fraktion (F5) an der Spitze der Flüssigkeitssäule ist, $\Delta z_{34}$ die Höhendifferenz zwischen dem Auslass (122) des Verdichters (12) und der freien Oberfläche der verdichteten Fraktion (F5) an der Spitze der Flüssigkeitssäule ist, $p_{Fl\"ussigkeit}$ die Volumenmasse in $kg/m^3$ der von dem ersten Separator (11) abgetrennten flüssigen Phase (F2) und der von dem zweiten Separator (13) abgetrennten verdichteten Fraktion (F5) ist.

6. Gleichrichter (10) nach einem der Ansprüche 4 oder 5, **dadurch gekennzeichnet, dass** die Höhendifferenz zwischen dem ersten und zweiten Separator (11, 13) größer als die Höhe (h) der Flüssigkeitssäule (23) ist, ermittelt durch die folgende Gleichung:

$$h \approx \frac{\Lambda_{12} \cdot \frac{L_{12}}{D_{h-12}} \cdot \frac{\rho_{12} \cdot u_{12}^{2}}{2} + \Delta P_{Tauscher}}{p_{Fl\"ussigkeit} \cdot g}$$

7. Gleichrichter (10) nach einem der Ansprüche 1 bis 6, **dadurch gekennzeichnet, dass** der Verdichter (12) höher als die Basis des ersten und zweiten Separators (11, 13) angeordnet ist und/oder dass der Verdichter (12) von einem Wärmetauscher gebildet ist.

8. Gleichrichter (10) nach einem der Ansprüche 1 bis 7, **dadurch gekennzeichnet, dass** der Gleichrichter (10) einen zweiten Auslass (S2) umfasst, der sich von dem ersten Auslass (S1) unterscheidet und aus dem Gleichrichter (10) die von dem zweiten Separator (13) abgetrennte nicht verdichtete Fraktion (F6) ableitet.

9. Gleichrichter (10) nach einem der Ansprüche 1 bis 8, **dadurch gekennzeichnet, dass** der erste Separator (11) von einem ersten Separator gebildet ist, in welchem die Trennung zwischen dem gasförmigen und flüssigen Teil (F2, F3) des Einlassfluids (F1) durch Schwerkraft erfolgt, wobei der erste Separator in einem unteren Teil mit der durch Schwerkraft abgetrennten flüssigen Phase (F2) und in einem oberen Teil mit der durch Schwerkraft abgetrennten gasförmigen Phase (F3) gefüllt ist, wobei der erste Separator umfasst:

   - mindestens eine erste Einlassöffnung (111), die auf einer Seitenfläche des ersten Separators eingerichtet ist und in den ersten Separator ausmündet,
   - mindestens eine erste Auslassöffnung (112), die in dem unteren Teil des ersten Separators eingerichtet ist, in den ersten Separator ausmündet und das Fließen aus dem ersten Separator nur der im ersten Separator durch Schwerkraft abgetrennten flüssigen Phase (F2) sicherstellt,
   - und mindestens eine zweite Auslassöffnung (113), die in dem oberen Teil des ersten Separators eingerichtet ist, in den ersten Separator ausmündet und das Fließen aus dem ersten Separator nur der in dem ersten Separator durch Schwerkraft abgetrennten gasförmigen Phase (F3) sicherstellt.

10. Gleichrichter (10) nach Anspruch 9, **dadurch gekennzeichnet, dass** der Gleichrichter (10) umfasst:

- eine erste, insbesondere im Wesentlichen horizontale Anschlussleitung (15), die zwischen dem Einlass (E) des Gleichrichters (10) und der ersten Einlassöffnung (111) des ersten Separators angeordnet ist und in welcher das Einlassfluid (F1) zirkuliert,
- eine zweite, insbesondere im Wesentlichen vertikale Anschlussleitung (16), die zwischen der zweiten Auslassöffnung (113) des ersten Separators und einem Einlass (121) des Verdichters (12) angeordnet ist und in welcher die im ersten Separator durch Schwerkraft abgetrennte gasförmige Phase (F3) zirkuliert.

11. Gleichrichter (10) nach einem der Ansprüche 1 bis 10, **dadurch gekennzeichnet, dass** der zweite Separator (13) von einem zweiten Separator gebildet ist, der sich vom ersten Separator unterscheidet, in welchem die Trennung zwischen der verdichteten Fraktion (F5) und der verbliebenen, von dem Verdichter (12) nicht verdichteten Fraktion (F6) durch Schwerkraft erfolgt, wobei der zweite Separator umfasst:

- mindestens eine Einlassöffnung (131), die auf einer Seitenfläche des zweiten Separators eingerichtet ist und in den zweiten Separator ausmündet,
- mindestens eine erste Auslassöffnung (132), die in einem unteren Teil des zweiten Separators eingerichtet ist, die in den zweiten Separator ausmündet,
- und mindestens eine zweite Auslassöffnung (133), die in einem oberen Teil des zweiten Separators eingerichtet ist, in den zweiten Separator ausmündet und das Fließen aus dem zweiten Separator nur der in dem zweiten Separator durch Schwerkraft abgetrennten nicht verdichteten Fraktion (F6) sicherstellt.

12. Gleichrichter (10) nach Anspruch 11, **dadurch gekennzeichnet, dass** der Gleichrichter (10) umfasst:

- eine dritte, insbesondere im Wesentlichen horizontale Anschlussleitung (17), die einen sich insbesondere niedriger als der Einlass (121) des Verdichters (12) befindenden Auslass (122) des Verdichters (12) mit der Einlassöffnung (131) des zweiten Separators verbindet, in welcher die von dem Verdichter (12) verdichtete und nicht verdichtete Fraktion (F5, F6) gemeinsam zirkulieren,
- eine vierte Anschlussleitung (18), die zwischen dem zweiten Auslass (S2) des Gleichrichters (10) und der zweiten Auslassöffnung (133) des zweiten Separators angeordnet ist, in welcher die durch Schwerkraft in dem zweiten Separator abgetrennte nicht verdichtete Fraktion (F6) zirkuliert.

13. Gleichrichter (10) nach den Ansprüchen 9 oder 10 und 11 oder 12, **dadurch gekennzeichnet, dass** die Verbindungsvorrichtung (20) umfasst:

- eine fünfte, insbesondere im Wesentlichen vertikale Anschlussleitung (19) in der Nähe des ersten Separators, die zwischen dem ersten Auslass (S1) des Gleichrichters (10) und der ersten Auslassöffnung (112) des ersten Separators angeordnet ist, in welcher die durch Schwerkraft in dem ersten Separator abgetrennte flüssige Phase (F2) zirkuliert,
- eine sechste, insbesondere im Wesentlichen vertikale Anschlussleitung (20) in der Nähe des zweiten Separators, die sich ab der ersten Auslassöffnung (132) des zweiten Separators bis zu entweder einem Verbindungspunkt (P) mit der fünften Anschlussleitung (19), der niedriger als der erste Separator liegt, oder einer zweiten Einlassöffnung (114) des ersten Separators, die in den ersten Separator ausmündet, erstreckt.

14. Gleichrichter (10) nach Anspruch 13, **dadurch gekennzeichnet, dass**:

- indem die sechste Anschlussleitung (20) an die fünfte Anschlussleitung (19) angeschlossen ist, die Verbindungsvorrichtung (20) ein Ansaugsystem (14), insbesondere durch einen Venturi-Effekt, umfasst, das am Verbindungspunkt (P) eingerichtet und derart konfiguriert ist, dass die von dem zweiten Separator (13) abgetrennte verdichtete Fraktion (F5) im Inneren der sechsten Anschlussleitung (20) in einer dem zweiten Separator entgegengesetzten Richtung angesaugt wird, oder
- die zweite Einlassöffnung (114) des ersten Separators in dem unteren Teil des ersten Separators derart eingerichtet ist, dass sie in den ersten Separator unterhalb der freien Oberfläche der durch Schwerkraft in dem ersten Separator abgetrennten und in dem unteren Teil des ersten Separators enthaltenen flüssigen Phase (F2) ausmündet, oder
- die zweite Einlassöffnung (114) des ersten Separators in dem oberen Teil des ersten Separators eingerichtet ist und dass sich die sechste Anschlussleitung (20) im Inneren des ersten Separators über die zweite Einlassöffnung (114) des ersten Separators hinaus verlängert, bis sie unterhalb der freien Oberfläche der durch Schwerkraft in dem ersten Separator abgetrennten und in dem unteren Teil des ersten Separators enthaltenen flüssigen Phase (F2) ausmündet.

**15.** Gleichrichter (10) nach einem der Ansprüche 13 oder 14, **dadurch gekennzeichnet, dass** die sechste Anschlussleitung (20) eine lineare oder punktuelle lokale Querschnittsverengung (21, 22) insbesondere in der Nähe des zweiten Separators umfasst und/oder dass der Übergangsquerschnitt des ersten Separators und/oder der fünften Anschlussleitung (19) derart bemessen ist, dass die durch Schwerkraft in dem ersten Separator abgetrennte flüssige Phase (F2) wie ein Stopfen für die durch Schwerkraft in dem ersten Separator abgetrennte gasförmige Phase (F3) in Richtung des ersten Auslasses (S1) des Gleichrichters (10) wirkt und/oder dass der Übergangsquerschnitt des zweiten Separators und/oder der sechsten Anschlussleitung (20) derart bemessen ist, dass die durch Schwerkraft in dem zweiten Separator abgetrennte verdichtete Fraktion (F5) wie ein Stopfen für die durch Schwerkraft in dem zweiten Separator abgetrennte nicht verdichtete Fraktion (F6) in Richtung des ersten Auslasses (S1) des Gleichrichters (10) wirkt.

**16.** Thermodynamische Absorptionsmaschine, **dadurch gekennzeichnet, dass** sie mindestens einen Gleichrichter (10) nach einem der vorangehenden Ansprüche umfasst.

## Claims

**1.** A rectifier (10) for a thermodynamic absorption machine, comprising an inlet (E) feeding the rectifier (10) with a two-phase input fluid (F1) having a liquid phase (F2) and a gas phase (F3) and formed by mixing between a refrigerant and an absorbent, **characterized in that** the rectifier (10) comprises the following distinct elements:

- a first separator (11) which provides separation between the liquid phase (F2) and the gas phase (F3) of the input fluid (F1),
- a condenser (12) which condenses a fraction (F5) of the gas phase (F3) separated by the first separator (11),
**characterized by**
- a second separator (13) which provides separation between the fraction (F5) condensed by the condenser (12) and a remaining fraction (F6) not condensed by the condenser (12),
- and a connection device (20) which connects the first and second separators (11, 13) and which is configured so as to form a siphon for the liquid phase (F2) separated by the first separator (11) and for the condensed fraction (F5) separated by the second separator (13).

**2.** The rectifier (10) as claimed in claim 1, **characterized in that** the connection device (20) puts the liquid phase (F2) separated by the first separator (11) and the condensed fraction (F5) separated by the second separator (13) in fluid contact in a way which blocks circulation of the gas phase (F3) separated by the first separator (11) and circulation of the noncondensed fraction (F6) separated by the second separator (13) through the connection device (20).

**3.** The rectifier (10) as claimed in claim 2, **characterized in that** the connection device (20) inhibits the circulation of the gas phase (F3) separated by the first separator (11) and the circulation of the noncondensed fraction (F6) separated by the second separator (13), in the direction of a first outlet (S1) of the rectifier (10) which discharges out of the rectifier (10) a mixture produced in the connection device (20) between the liquid phase (F2) separated by the first separator (11) and the condensed fraction (F5) separated by the second separator (13).

**4.** The rectifier (10) as claimed in one of one of previous claims, **characterized in that** the connection device (20) is configured so as to maintain a liquid column (23) formed in all or part by the condensed fraction (F5) separated by the second separator (13), said liquid column (23) being in fluid contact with the liquid phase (F2) separated by the first separator (11) and, optionally, **in that** the second separator (13) is positioned higher than the first separator (11), the difference in altitude between the first and second separators (11, 13) being greater than the height (h) of said liquid column (23).

**5.** The rectifier (10) as claimed in claim 4, **characterized in that** the difference in altitude between the first and second separators is greater than the height (h) of said liquid column (23) calculated by the following formula:

$$h = \frac{g \cdot \left( \rho_{12} \cdot \Delta z_{12} - \left( \frac{\rho_{12} + \rho_{34}}{2} \right) \cdot \Delta z_{23} - \rho_{34} \cdot \Delta z_{34} \right) + \Lambda_{12} \cdot \frac{L_{12}}{D_{h-12}} \cdot \frac{\rho_{12} \cdot u_{12}^{2}}{2} + \Delta P_{exchanger} - \frac{\rho_{12} \cdot u_{12}^{2}}{2} + \frac{\rho_{34} \cdot u_{34}^{2}}{2}}{\rho_{liquid} \cdot g}$$

where h is the height of the liquid column (23) between the free surface of the condensed fraction (F5) separated by the second separator (13) and the free surface of the liquid phase (F2) separated by the first separator (11), g is the gravitational constant, $\rho_{12}$ is the density in kg/m$^3$ of the gas phase (F3) located between the free surface of the liquid phase (F2) separated by the first separator (11) and the inlet (121) of the condenser (12), $\Delta z_{12}$ is the difference in altitude between the free surface of the liquid phase (F2) separated by the first separator (11) and the inlet (121) of the condenser (12), $\Lambda_{12}$ is the viscous friction coefficient, $L_{12}$ is the distance between the free surface of the liquid phase (F2) separated by the first separator (11) and the inlet (121) of the condenser (12), $D_{h-12}$ is the diameter of the linking pipe (16) between the first separator (11) and the condenser (12), $u_{12}$ is the rate of flow of the gas phase (F3) between the first separator (11) and the condenser (12), $\Delta z_{23}$ is the difference in altitude between the inlet (121) and the outlet (122) of the condenser (12), $\Delta P_{exchanger}$ is the pressure drop undergone through the condenser (12), $\rho_{34}$ is the density in kg/m$^3$ and $u_{34}$ is the rate of flow of the noncondensed fraction (F6) between the outlet (122) of the condenser (12) and the free surface of the condensed fraction (F5) at the summit of the liquid column, $\Delta z_{34}$ is the difference in altitude between the outlet (122) of the condenser (12) and the free surface of the condensed fraction (F5) at the summit of the liquid column and $\rho_{liquid}$ is the density in kg/m$^3$ of the liquid phase (F2) separated by the first separator (11) and of the condensed fraction (F5) separated by the second separator (13).

6. The rectifier (10) as claimed in either of claims 4 and 5, **characterized in that** the difference in altitude between the first and second separators (11, 13) is greater than the height (h) of said liquid column (23) estimated by the following equation:

$$h \approx \frac{\Lambda_{12} \cdot \dfrac{L_{12}}{D_{h-12}} \cdot \dfrac{\rho_{12} \cdot u_{12}^{2}}{2} + \Delta P_{exchanger}}{\rho_{liquid} \cdot g}$$

7. The rectifier (10) as claimed in one of claims 1 to 6, **characterized in that** the condenser (12) is positioned higher than the base of the first and second separators (11, 13) and/or **in that** the condenser (12) is composed of a heat exchanger.

8. The rectifier (10) as claimed in one of claims 1 to 7, **characterized in that** the rectifier (10) comprises a second outlet (S2) which is separate from the first outlet (S1) and which discharges, out of the rectifier (10), the noncondensed fraction (F6) separated by the second separator (13).

9. The rectifier (10) as claimed in one of claims 1 to 8, **characterized in that** the first separator (11) is composed of a first separator in which the separation between the gas and liquid parts (F2, F3) of the input fluid (F1) is carried out by gravity, said first separator being filled in a lower part by the liquid phase (F2) separated by gravity and in an upper part by the gas phase (F3) separated by gravity, the first separator comprising:

- at least one first inlet opening (111) inserted on a side face of the first separator and emerging in the first separator,
- at least one first outlet opening (112) inserted in the lower part of the first separator, emerging in the first separator and providing the flow, out of the first separator, solely of the liquid phase (F2) separated by gravity in the first separator,
- and at least one second outlet opening (113) inserted in the upper part of the first separator, emerging in the first separator and providing the flow, out of the first separator, solely of the gas phase (F3) separated by gravity in the first separator.

10. The rectifier (10) as claimed in claim 9, **characterized in that** the rectifier (10) comprises:

- a first linking pipe (15), in particular substantially horizontal, positioned between the inlet (E) of the rectifier (10) and the first inlet opening (111) of the first separator and in which the input fluid (F1) circulates,
- a second linking pipe (16), in particular substantially vertical, positioned between the second outlet opening (113) of the first separator and an inlet (121) of the condenser (12) and in which the gas phase (F3) separated by gravity in the first separator circulates.

11. The rectifier (10) as claimed in one of claims 1 to 10, **characterized in that** the second separator (13) is composed of a second separator distinct from the first separator, in which the separation between the fraction (F5) condensed and the remaining fraction (F6) not condensed by the condenser (12) takes place by gravity, said second separator comprising:

- at least one inlet opening (131) inserted on a side face of the second separator and emerging in the second separator,
- at least one first outlet opening (132) inserted in a lower part of the second separator and emerging in the second separator,
- and at least one second outlet opening (133) inserted in an upper part of the second separator, emerging in the second separator and providing the flow, out of the second separator, solely of the noncondensed fraction (F6) separated by gravity in the second separator.

12. The rectifier (10) as claimed in claim 11, **characterized in that** the rectifier (10) comprises:

- a third linking pipe (17), in particular substantially horizontal, connecting an outlet (122) of the condenser (12), in particular located lower than the inlet (121) of the condenser (12), to the inlet opening (131) of the second separator, in which the fractions (F5, F6) condensed and not condensed by the condenser (12) jointly circulate,
- a fourth linking pipe (18) positioned between the second outlet (S2) of the rectifier (10) and the second outlet opening (133) of the second separator, in which the noncondensed fraction (F6) separated by gravity in the second separator circulates.

13. The rectifier (10) as claimed in claims 9 or 10 and 11 or 12, **characterized in that** the connection device (20) comprises:

- a fifth linking pipe (19), in particular substantially vertical in the vicinity of the first separator, positioned between the first outlet (S1) of the rectifier (10) and the first outlet opening (112) of the first separator, in which the liquid phase (F2) separated by gravity in the first separator circulates,
- a sixth linking pipe (20), in particular substantially vertical in the vicinity of the second separator, extending from the first outlet opening (132) of the second separator as far as either a point of connection (P) to the fifth linking pipe (19) located lower than the first separator or a second inlet opening (114) of the first separator emerging in the first separator.

14. The rectifier (10) as claimed in claim 13, **characterized in that**:

- the sixth linking pipe (20) being linked to the fifth linking pipe (19), the connection device (20) comprises a system for suction (14), in particular by a Venturi effect, inserted at said point of connection (P) and configured so as to suck the condensed fraction (F5) separated by the second separator (13) inside the sixth linking pipe (20) in an opposite direction to the second separator, or
- the second inlet opening (114) of the first separator is inserted in the lower part of the first separator so as to emerge in the first separator below the free surface of the liquid phase (F2) separated by gravity in the first separator and present in the lower part of the first separator, or
- the second inlet opening (114) of the first separator is inserted in the upper part of the first separator and **in that** the sixth linking pipe (20) is prolonged inside the first separator beyond the second inlet opening (114) of the first separator, until emerging below the free surface of the liquid phase (F2) separated by gravity in the first separator and present in the lower part of the first separator.

15. The rectifier (10) as claimed in one of claims 13 or 14, **characterized in that** the sixth linking pipe (20) comprises a local narrowing in cross section (21, 22), linear or pointwise, in particular in the vicinity of the second separator, and/or **in that** the cross section of flow of the first separator and/or of the fifth linking pipe (19) is sized so that the liquid phase (F2) separated by gravity in the first separator forms a plug effect for the gas phase (F3) separated by gravity in the first separator, in the direction of the first outlet (S1) of the rectifier (10), and/or **in that** the cross section of flow of the second separator and/or of the sixth linking pipe (20) is sized so that the condensed fraction (F5) separated by gravity in the second separator forms a plug effect for the noncondensed fraction (F6) separated by gravity in the second separator, in the direction of the first outlet (S1) of the rectifier (10).

16. A thermodynamic absorption machine, **characterized in that** it comprises at least one rectifier (10) as claimed in any one of the preceding claims.

Figure 1

Figure 2

Figure 3

EP 2 992 278 B1

Figure 4

24

Figure 5

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- KR 20100026201

- GB 458836 A